# EUROPÄISCHE PATENTSCHRIFT

(11) **EP 3 782 754 B1**
(45) Veröffentlichungstag und Bekanntmachung des Hinweises auf die Patenterteilung: **17.04.2024**
(21) Anmeldenummer: 19193170.8
(22) Anmeldetag: 22.08.2019
(51) Int. Cl.: B23D 63/16, B23D 71/04

(54) **FEILE ZUM FEILEN DES SCHNEIDZAHNS EINER SÄGEKETTE**
FILE FOR FILING THE CUTTING TOOTH OF A SAW CHAIN
LIME DESTINÉE À LIMER LA DENTURE DE COUPE D'UNE CHAÎNE COUPANTE

(43) Veröffentlichungstag der Anmeldung: 24.02.2021
(73) Patentinhaber: Andreas Stihl AG & Co. KG, 71336 Waiblingen (DE)
(72) Erfinder: LUX, Thomas, 73553 Alfdorf (DE); MAIER, Georg Dr., 71394 Kernen (DE); STAPEL, Bertil, 73614 Schorndorf (DE); GRAMS, Tobias, 71332 Waiblingen (DE); ALTHOFF, Norbert, 51789 Lindlar (DE)
(74) Vertreter: Reinhardt, Annette

(56) Entgegenhaltungen:
- EP-A1- 3 392 007
- CH-A- 219 984
- US-A- 3 339 254

## Beschreibung

Die Erfindung betrifft eine Feile zum Feilen des Schneidzahns einer Sägekette gemäß dem Oberbegriff des Patentanspruchs 1. Aus der EP 3 392 007 A1 geht ein Schneidglied einer Sägekette hervor, das eine Auflagefläche für eine Feile aufweist. Beim Nachschärfen wird die Feile auf der Auflagefläche geführt. Eine Feile zum Feilen eines solchen Schneidglieds weist mindestens eine unbehauene Führungsfläche auf, die auf die Auflagefläche aufgesetzt werden kann.

Die EP 3 392 007 A1 offenbart eine Sägekette gemäß dem Oberbegriff des Patentanspruchs 1.

Die US 3,339,254 A zeigt eine Feile für ein Schneidglied einer Sägekette, die einander gegenüberliegende unbehauene Führungsflächen aufweist. In Umfangsrichtung zwischen den Führungsflächen erstrecken sich im Querschnitt gebogen ausgebildete, behauene Feilenflächen. Auf die Führungsfläche sind Linien aufgebracht, die die Ausrichtung der Feile bezogen auf die Längsrichtung der Sägekette erleichtern sollen.

Die CH 219 984 A gibt eine Feile an, die einen V-förmigen Einschnitt aufweist, der als Gabelschlüssel verwendbar ist.

Es hat sich gezeigt, dass es für den Bediener beispielsweise bei schlechten Lichtverhältnissen schwierig sein kann, die unbehauene Führungsfläche von einer behauenen Feilenfläche zu unterscheiden. Ein falsches Aufsetzen der Feile kann zum Feilen der Auflagefläche und damit zu unbefriedigenden Feilergebnissen führen.

Der Erfindung liegt die Aufgabe zugrunde, eine Feile zum Feilen des Schneidzahns einer Sägekette, die ein einfaches Nachschärfen erlaubt, anzugeben.

Diese Aufgabe wird durch eine Feile mit den Merkmalen des Anspruchs 1 gelöst.

Für eine Feile zum Feilen eines Schneidzahns einer Sägekette ist vorgesehen, dass die Feile in einem Querschnitt eine unbehauene Führungsfläche und mindestens eine in Umfangsrichtung an die Führungsfläche angrenzende Feilenfläche besitzt. Mit der unbehauenen Führungsfläche kann die Feile an der Auflagefläche aufgesetzt werden. Die Feilenfläche, die an die Führungsfläche angrenzt, ist vorteilhaft zur Anlage an der Schneidfläche und Bearbeitung der Schneidfläche vorgesehen. Dadurch, dass die Feilenfläche unmittelbar an die unbehauene Führungsfläche angrenzt, und die Führungsfläche selbst unbehauen ist, kann auf einfache Weise erreicht werden, dass die Auflagefläche beim Nachschärfen verlängert wird und ihre Ausrichtung dabei beibehält. Dadurch kann auch für einen ungeübten Benutzer ein einfaches und exaktes Nachschärfen ermöglicht werden.

Es hat sich gezeigt, dass es bei Feilen, die unbehauene und behauene Seiten und insbesondere einen regelmäßigen Querschnitt wie beispielsweise einen Sechseckquerschnitt aufweisen, für den Bediener schwierig sein kann, die korrekte Orientierung der Feile zu erkennen. Um die mindestens eine unbehauene Führungsfläche von der mindestens einen behauenen Feilenfläche optisch und/oder haptisch für den Bediener gut unterscheidbar zu machen, ist vorgesehen, dass die Feile eine Kennzeichnung aufweist, aus der sich die Drehlage der Feile um ihre Längsmittelachse ergibt. In bevorzugter Gestaltung ist die Kennzeichnung an der Führungsfläche oder an der der Führungsfläche gegenüberliegenden Seite der Feile angeordnet. Für eine korrekte Orientierung der Feile, also für eine korrekte Drehlage der Feile um ihre Längsmittelachse, muss der Bediener lediglich darauf achten, dass die Seite der Feile, die die Kennzeichnung aufweist, beim Feilen oben oder - je nach Gestaltung der Feile - unten liegt.

Die Feile kann zwei Führungsflächen aufweisen, also wendbar sein. Dabei kann vorgesehen sein, dass nur eine der beiden Führungsflächen eine Kennzeichnung aufweist oder dass beide Führungsflächen eine Kennzeichnung aufweisen. Die Kennzeichnung kann bei einer Feile mit zwei Führungsflächen für beide Führungsflächen unterschiedlich sein, so dass der Bediener aus der Kennzeichnung auch erkennen kann, welche der Führungsflächen in Kontakt mit der Auflagefläche ist. In alternativer Gestaltung kann auch vorgesehen sein, dass die Feile lediglich eine Führungsfläche aufweist, also nicht wendbar ist.

Bevorzugt ist die Kennzeichnung durch eine unregelmäßige Geometrie der Feile in mindestens einem Querschnitt gebildet. Besonders bevorzugt weicht der Querschnitt der Feile in mindestens einem Querschnitt von einem regelmäßigen Sechseckquerschnitt ab. Insbesondere bei Feilen mit regelmäßigem Sechseckquerschnitt ist die Orientierung der Feile für den Bediener schlecht erkennbar. Für Feilen, deren Feilenflächen gewölbt und deren mindestens eine Führungsfläche im Querschnitt gerade ausgebildet sind, ist die Lage der Feilenflächen und der mindestens einen Führungsfläche in der Regel ohne zusätzliche Kennzeichnung für den Bediener erfassbar.

In einer ersten Ausführungsvariante weicht das Kantenmaß der der Führungsfläche gegenüberliegenden Seite der Feile vom Kantenmaß der Führungsfläche ab. Dadurch ist für den Bediener optisch erkennbar, ob die Feile wie gewünscht auf der Führungsfläche oder fälschlicherweise auf der der Führungsfläche gegenüberliegenden Seite der Feile aufliegt. Bevorzugt ist das Kantenmaß der der Führungsfläche gegenüberliegenden Seite der Feile kleiner als das Kantenmaß der Führungsfläche. Das Kantenmaß der der Führungsfläche gegenüberliegenden Seite der Feile ist vorzugsweise so gewählt, dass kein stabiles Auflegen der Feile auf dieser Fläche möglich ist. Bevorzugt beträgt das Kantenmaß der der Führungsfläche gegenüberliegenden Seite der Feile weniger als 3 mm.

Alternativ oder zusätzlich kann vorgesehen sein, dass die Form der der Führungsfläche gegenüberliegenden Seite der Feile in mindestens einem Querschnitt von einem Verlauf parallel zur Führungsfläche abweicht. Ein solcher von einem parallel zur Führungsfläche abweichender Verlauf ist für den Bediener spürbar und sichtbar, so dass der Bediener die Lage der der Führungsfläche gegenüberliegenden Seite und damit auch die Lage der Führungsfläche beispielsweise auch bei schlechten Lichtverhältnissen gut erkennen kann. Vorteilhaft weist die der Führungsfläche gegenüberliegende Seite der Feile mindestens eine Erhöhung auf. Die Erhöhung ist vorzugsweise so ausgebildet, dass ein stabiles Auflegen der Feile auf der der Führungsfläche gegenüberliegenden Seite nicht möglich ist oder dass der Bediener beim Bewegen der Feile über das Werkstück die Auflage auf der der Führungsfläche gegenüberliegenden Seite der Feile spürt, beispielsweise durch ein Rattern der Feile gegenüber dem Werkstück. In alternativer oder ergänzender Gestaltung ist vorteilhaft vorgesehen, dass die der Führungsfläche gegenüberliegende Seite der Feile mindestens eine Vertiefung aufweist.

Die unbehauene Führungsfläche erstreckt sich vorteilhaft über mindestens 1/6 des Umfangs der Feile in diesem Querschnitt. Die parallel zur Führungsfläche gemessene Breite der Feile vergrößert sich vorteilhaft in mindestens einem Bereich des Querschnitts der Feile mit steigendem Abstand von der Führungsfläche. Dadurch kann auf einfache Weise ein Hinterschnitt an der Schneidfläche hergestellt werden, ohne dass der Bereich der Anbindung des Schneidzahns an den Grundkörper des Schneidglieds zu sehr geschwächt wird. Bevorzugt vergrößert sich der Abstand der Feilenfläche zu einer Mittelebene der Feile, die die Längsmittelachse der Feile enthält und senkrecht zur Führungsfläche verläuft, in einem ersten Bereich der Feile mit steigendem Abstand von der Führungsfläche. In einem zweiten Bereich der Feile, dessen Abstand zur Führungsfläche größer als der Abstand des ersten Bereichs zur Führungsfläche ist, ist vorteilhaft vorgesehen, dass sich der Abstand der Feilenfläche zu der Mittelebene der Feile mit steigendem Abstand zur Führungsfläche verringert. Dadurch wird durch den ersten Bereich und den zweiten Bereich der Feile ein Hinterschnitt an der Schneidfläche erzeugt.

Für ein Schneidglied, das zwei winklig zueinander ausgerichtete Schneidflächen besitzt, die bevorzugt jeweils eben verlaufen, ist vorgesehen, dass die Feile eine in Umfangsrichtung an die erste Feilenfläche angrenzende zweite Feilenfläche besitzt, wobei die Führungsfläche mit der ersten Feilenfläche einen ersten Winkel einschließt, der mehr als 90° beträgt, und wobei die Führungsfläche mit der zweiten Feilenfläche einen zweiten Winkel einschließt, der weniger als 90° beträgt. Dadurch kann eine vergleichsweise breite Anbindung des Schneidezahns an den Grundkörper des Schneidglieds und gleichzeitig ein vorteilhafter Schneidwinkel erreicht werden. Vorteilhaft bildet die erste Feilenfläche den ersten Bereich der Feile, und die zweite Feilenfläche bildet den zweiten Bereich der Feile.

Für eine Feile zum Feilen eines Schneidzahns mit gebogener Schneidkante ist vorteilhaft vorgesehen, dass die Feile eine gebogen verlaufende, in Umfangsrichtung an die Führungsfläche angrenzende Feilenfläche besitzt. Die Führungsfläche und die Feilenfläche der Feile werden vorteilhaft durch unterschiedliche Umfangsabschnitte der Feile gebildet.

Vorteilhaft besitzen die erste Feilenfläche und die zweite Feilenfläche das gleiche in Umfangsrichtung gemessene Kantenmaß. In bevorzugter Gestaltung besitzt die Feile zwei einander gegenüberliegende unbehauene Führungsflächen, zwei einander gegenüberliegende erste Feilenflächen und zwei einander gegenüberliegende zweite Feilenflächen. Dadurch kann die Feile in mindestens zwei Orientierungen zum Nachschärfen genutzt werden. In besonders bevorzugter Gestaltung besitzt die Feile einen Sechskantquerschnitt. Vorteilhaft beträgt die Breite der Führungsfläche mindestens 3 mm. Dadurch wird eine gute Führung der Feile durch die Führungsfläche ermöglicht.

Alternativ oder ergänzend kann vorgesehen sein, dass die Führungsfläche durch mindestens eine Vertiefung unterbrochen ist. Als Führungsfläche wird dabei vorliegend der Bereich der auf die Auflagefläche aufzusetzenden Seite der Feile verstanden, der mit der Auflagefläche bei Feilen in Kontakt kommen kann. An möglichen Vertiefungen ist die ebene Führungsfläche unterbrochen. Da sichergestellt sein muss, dass die erste Feilenfläche sich bis zur Auflagefläche erstreckt, sind Erhöhungen der Auflagefläche gegenüber der Unterkante der ersten Feilenfläche vorteilhaft nicht vorgesehen.

Die mindestens eine Erhöhung und die mindestens eine Vertiefung können sich dabei durchgehend über die gesamte Länge der ersten Feilenfläche der Feile erstrecken. Die Länge der ersten Feilenfläche entspricht dabei der Länge des Längsabschnitts der Feile, der zum Eingriff mit dem Schneidglied vorgesehen ist. Die Feile kann weitere Längsabschnitte wie beispielsweise einen Längsabschnitt zur Verbindung mit einem Heft für die Feile oder einen Längsabschnitt zum Führen der Feile, der am freien Ende der Feile angeordnet ist, aufweisen.

Alternativ kann vorgesehen sein, dass die mindestens eine Erhöhung oder die mindestens eine Vertiefung in Längsrichtung Unterbrechungen aufweisen. Im Bereich der Unterbrechungen weist die Feile vorzugsweise einen Sechskantquerschnitt auf.

Vorteilhaft erstrecken sich die Erhöhung und/oder die Vertiefung nur über einen Teil der Breite der der Führungsfläche gegenüberliegenden Seite. Vorteilhaft weist die der Führungsfläche gegenüberliegende Seite in einem, insbesondere in jedem Querschnitt, in dem eine Erhöhung oder Vertiefung angeordnet ist, auch einen Bereich auf, der parallel zur Führungsfläche verläuft. Bevorzugt ist die Erhöhung oder Vertiefung im Querschnitt zwischen zwei parallel zur Führungsfläche verlaufenden Abschnitten angeordnet. Es kann jedoch auch vorgesehen sein, dass sich die mindestens eine Erhöhung und/oder die mindestens eine Vertiefung über die gesamte Breite der der Führungsfläche gegenüberliegenden Seite bzw. über die gesamte Breite der Führungsfläche erstrecken. Die Breite der mindestens einen Erhöhung oder der mindestens einen Vertiefung entspricht dann dem Kantenmaß der der Führungsfläche gegenüber liegenden Seite bzw. dem Kantenmaß der Führungsfläche. Die mindestens eine Erhöhung und/oder Vertiefung kann sich dabei in einem Querschnitt über die gesamte Breite der Führungsfläche erstrecken. Bevorzugt ist jedoch vorgesehen, dass die mindestens eine Erhöhung und/oder Vertiefung zur Längsrichtung der Feile geneigt ist und sich dadurch die Lage der Erhöhung und/oder Vertiefung an der Führungsfläche von Querschnitt zu Querschnitt der Feile ändert.

Die erste Feilenfläche, die zweite Feilenfläche und die Führungsfläche sind im Querschnitt gerade ausgebildet. Keine der Flächen weist demnach eine Wölbung auf. Für die Führungsfläche kann in alternativer, nicht erfindungsgemäßer Gestaltung eine konkave Wölbung vorteilhaft sein. Dadurch liegt die Führungsfläche nur auf zwei Längsstegen auf.

Um dem Bediener eine Rückmeldung über die Orientierung der mindestens einen Führungsfläche, also über die Drehlage der Feile um ihre Längsmittelachse zu geben, ist vorgesehen, dass die Feile einen ersten Längsabschnitt und einen zweiten Längsabschnitt aufweist und dass der Querschnitt in dem zweiten Längsabschnitt von dem Querschnitt in dem ersten Längsabschnitt abweicht. Der erste Längsabschnitt ist dabei der Längsabschnitt der Feile, der die erste Feilenfläche, die zweite Feilenfläche und die Führungsfläche aufweist und der insbesondere zum Kontakt mit einem Schneidzahn vorgesehen ist. Der zweite Längsabschnitt ist zwischen dem ersten Längsabschnitt und einem freien Ende der Feile angeordnet. Das freie Ende der Feile ist dabei das einem Handgriff für die Feile entfernt liegende Ende der Feile. Die Länge des zweiten Längsabschnitts ist vorteilhaft deutlich geringer als die Länge des ersten Längsabschnitts.

Es ist vorgesehen, dass die Feile im zweiten Längsabschnitt einen gegenüber dem Querschnitt im ersten Längsabschnitt an mindestens einer Seite abgeflachten Querschnitt aufweist. Bevorzugt ist die Feile im zweiten Längsabschnitt an gegenüberliegenden Seiten abgeflacht. Besonders bevorzugt ist die Feile in dem zweiten Längsabschnitt an mindestens einer Führungsfläche abgeflacht ausgebildet.

In alternativer Gestaltung ist vorteilhaft vorgesehen, dass die Feile in dem zweiten Längsabschnitt mindestens eine, insbesondere zwei zur Längsrichtung geneigte Flächen aufweist. An den zur Längsrichtung geneigten Flächen ist die Feile demnach abgeschrägt ausgebildet. Besonders bevorzugt laufen zwei zur Längsrichtung geneigte Flächen an einer Kante zusammen. Die Kante bildet bevorzugt das freie Ende der Feile. Alternativ oder zusätzlich kann vorgesehen sein, dass die Feile im zweiten Längsabschnitt einen Längsschlitz aufweist. Vorteilhaft ist der Längsschlitz parallel oder senkrecht zu mindestens einer Führungsfläche angeordnet. Der Längsschlitz gibt eine optische Rückmeldung über die Lage der mindestens einen Führungsfläche. Gleichzeitig erleichtert der Längsschlitz das Greifen der Feile, da die Griffigkeit durch den Längsschlitz erhöht wird.

Damit die Drehlage der Feile für einen Bediener gut erkennbar ist, ist vorteilhaft vorgesehen, dass die Feile über mindestens 30% der Länge der ersten Feilenfläche eine Kennzeichnung trägt, die die Drehlage der Feile um ihre Längsmittelachse angibt. Die Kennzeichnung erstreckt sich an der Führungsfläche und/oder an der der Führungsfläche gegenüberliegenden Seite der Feile vorteilhaft vollflächig über mindestens 30% der Länge der ersten Feilenfläche. Die Kennzeichnung kann dabei eine optische Kennzeichnung und/oder eine Struktur oder Form der Führungsfläche oder der der Führungsfläche gegenüberliegenden Seite der Feile sein.

Ausführungsbeispiele der Erfindung werden im Folgenden anhand der Zeichnung erläutert. Es zeigen:
- Fig. 1 und Fig. 2: Seitenansichten eines Ausschnitts einer Sägekette, die mit einer erfindungsgemäßen Feile geschärft werden kann,
- Fig. 3: einen Schnitt entlang der Linie III-III in Fig. 1,
- Fig. 4 und Fig. 5: perspektivische Darstellungen des Ausschnitts der Sägekette in einer Blickrichtung, die der Schärfrichtung entspricht,
- Fig. 6: eine Seitenansicht des Schneidglieds der Sägekette,
- Fig. 7: eine Draufsicht auf das Schneidglied in Richtung des Pfeils VII in Fig. 6,
- Fig. 8: einen Schnitt entlang der Linie VIII-VIII in Fig. 6,
- Fig. 9: eine Seitenansicht des Ausschnitts der Sägekette mit daran angeordneter Feile,
- Fig. 10: eine Seitenansicht in Richtung des Pfeils X in Fig. 9,
- Fig. 11 und Fig. 12: perspektivische Darstellungen mit Blickrichtung in Schärfrichtung in einem ersten Nachschärfzustand des Abschnitts der Sägekette,
- Fig. 13: eine Schnittdarstellung der Sägekette in dem in den Fig. 11 und 12 gezeigten Nachschärfzustand entlang der Linie III-III in Fig. 1,
- Fig. 14 und Fig. 15: perspektivische Darstellungen des Abschnitts der Sägekette mit Blickrichtung in Schärfrichtung in einem zweiten Nachschärfzustand,
- Fig. 16: einen Schnitt durch die Sägekette in dem Nachschärfzustand aus den Fig. 14 und 15 in einem Schnitt entlang der Linie III-III in Fig. 1,
- Fig. 17: einen schematischen Querschnitt einer Feile zum Nachschärfen des in den Fig. 1 bis 16 dargestellten Schneidglieds,
- Fig. 18 bis Fig. 20: schematische Querschnittsdarstellungen von Ausführungsbeispielen von Feilen zum Nachschärfen eines Schneidglieds,
- Fig. 21 und Fig. 22: Seitenansichten eines Abschnitts eines weiteren Ausführungsbeispiels einer Sägekette,
- Fig. 23: einen Schnitt entlang der Linie XXIII-XXIII in Fig. 21,
- Fig. 24 und Fig. 25: Seitenansichten des Abschnitts des weiteren Ausführungsbeispiels einer Sägekette mit daran angeordneter, schematisch dargestellter Feile,
- Fig. 26: einen Schnitt entlang der Linie XXVI-XXVI in Fig. 24,
- Fig. 27: eine perspektivische Darstellung des Abschnitts der Sägekette aus den Fig. 21 bis 23 mit Blickrichtung in Schärfrichtung,
- Fig. 28: eine Seitenansicht des Schneidglieds der Sägekette aus den Fig. 21 bis 27,
- Fig. 29: eine Draufsicht auf das Schneidglied aus Fig. 28 in Richtung des Pfeils XXIX in Fig. 28 mit schematisch dargestellter Feile zum Nachschärfen,
- Fig. 30 zum: eine schematische Querschnittsdarstellung eines Ausführungsbeispiels einer nicht erfindungsgemäßen Feile Nachschärfen des Schneidglieds,
- Fig. 31: eine Seitenansicht des Schneidglieds aus Fig. 28 in vollständig nachgeschärftem Zustand,
- Fig. 32 bis 41: schematische Darstellungen weiterer Ausführungsbeispiele von Feilen, wobei in der mit "a" bezeichneten Figur jeweils eine perspektivische Darstellung der Feile und in der mit "b" bezeichneten Figur jeweils ein Querschnitt der Feile gezeigt ist,
- Fig. 42: eine schematische perspektivische Darstellung eines weiteren Ausführungsbeispiels einer nicht erfindungsgemäßen Feile,
- Fig. 43: eine schematische Darstellung eines weiteren Ausführungsbeispiels einer Feile im Querschnitt.

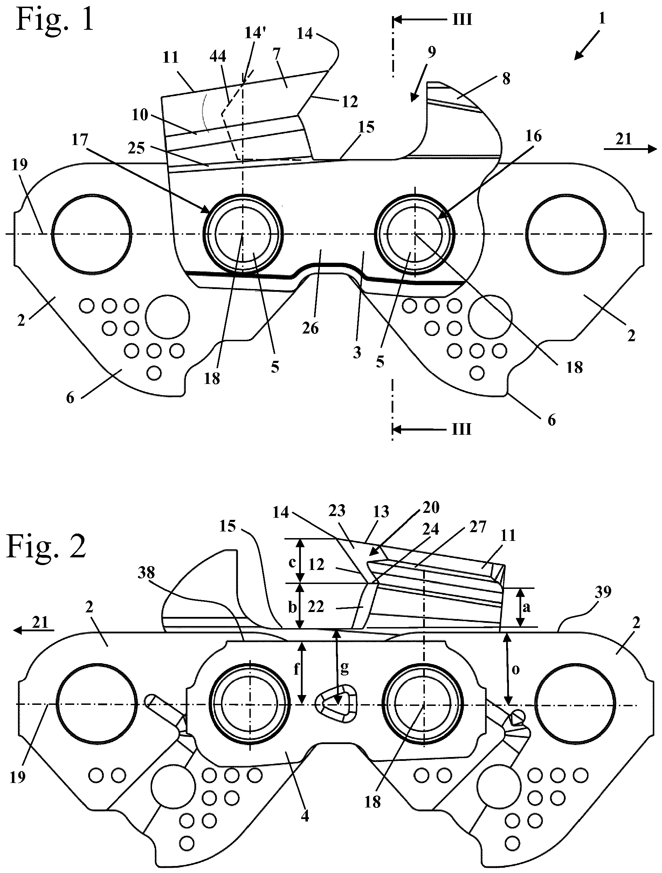

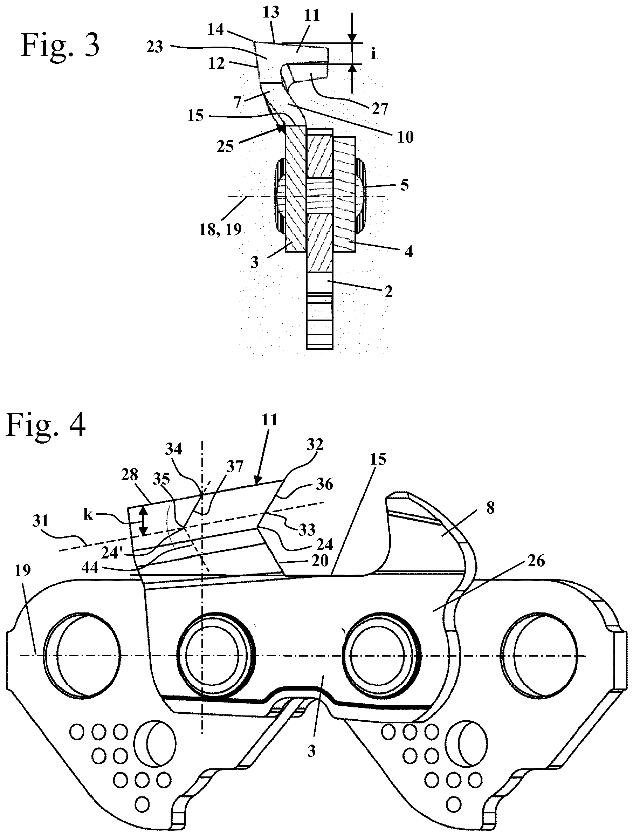

Fig. 1 zeigt in Seitenansicht einen Abschnitt einer Sägekette 1. Die Sägekette 1 besitzt Treibglieder 2 sowie Schneidglieder 3, die über Verbindungsbolzen 5 miteinander gelenkig verbunden sind. Die Sägekette 1 ist als Werkzeug für eine Motorsäge vorgesehen, in der die Sägekette 1 um eine Führungsschiene umlaufend anzuordnen ist. Dabei ragen Treibansätze 6 der Treibglieder 2 in eine Führungsnut der Führungsschiene und werden von einem Antriebsritzel der Motorsäge angetrieben. Die Sägekette 1 bewegt sich dabei in einer Laufrichtung 21 umlaufend um die Führungsschiene. Die Verbindungsbolzen 5 sind an Lagerstellen des Schneidglieds 3 angeordnet. Es ist eine in Laufrichtung 21 vorne angeordnete, vordere Lagerstelle 16 sowie eine in Laufrichtung 21 hinten liegende, hintere Lagerstelle 17 vorgesehen. Die Lagerstellen 16 und 17 besitzen jeweils Längsmittelachsen 18, die die Schwenkachsen der Glieder der Sägekette 1 bilden. Die Längsmittelachsen 18 spannen eine Lagerstellenebene 19 auf. Die Lagerstellen 16 und 17 sind in einem Grundkörper 26 des Schneidglieds 3 ausgebildet. Der Grundkörper 26 ist bevorzugt eben ausgebildet. Am Grundkörper 26 sind ein Tiefenbegrenzer 8 und ein Schneidzahn 7 angeordnet, die sich aus der Ebene des Grundkörpers 26 erheben können. Im Ausführungsbeispiel ist sowohl der Tiefenbegrenzer 8 als auch der Schneidzahn 7 aus der Grundkörperebene herausgebogen. Zwischen dem Tiefenbegrenzer 8 und dem Schneidzahn 7 ist eine Aussparung 9 ausgebildet, die in Richtung auf die Lagerstellenebene 19 von einer im Folgenden noch näher beschriebenen Auflagefläche 15 begrenzt ist. Im Ausführungsbeispiel nach Fig. 1 erstreckt sich die Auflagefläche 15 näherungsweise über den gesamten Boden der Aussparung 9. Der Schneidzahn 7 besitzt einen Zahnfuß 25, der den Bereich bezeichnet, an dem der Schneidzahn 7 am Grundkörper 26 des Schneidglieds 3 angebunden ist. Am Zahnfuß 25 ist der Schneidzahn 7 aus der Ebene des Grundkörpers 26 herausgebogen. Der Schneidzahn 7 besitzt einen Seitenabschnitt 10, an dem sich der Schneidzahn 10 mindestens in einem Abschnitt näherungsweise parallel zur Ebene des Grundkörpers 26 erstreckt, sowie einen Dachabschnitt 11, in dem der Schneidzahn 7 näherungsweise parallel zu den Längsmittelachsen 18 verläuft. Am Dachabschnitt 13 ist der Schneidzahn 7 zu einer Mittelebene der Sägekette 1 hin gebogen. Wie Fig. 3 zeigt, erstreckt sich der Dachabschnitt 11 zumindest teilweise über das dem Schneidglied 7 benachbarte Treibglied 2.

In Fig. 1 ist eine am Seitenabschnitt 10 ausgebildete erste Schneidkante 12 sowie eine Zahnspitze 14 des Schneidzahns 7 erkennbar, die zum Eingriff in ein Werkstück vorgesehen sind. Die Zahnspitze 14 ist dabei der Bereich des Schneidzahns 7, der in Laufrichtung 21 am weitesten vorne liegt. Die Zahnspitze 14 kann auch abgerundet oder gebogen ausgebildet sein.

Beim Nachschärfen des Schneidglieds 7 legt der Bediener eine Feile mit Anlage an der Schneidkante 12 auf die Auflagefläche 15 und führt die Feile entlang der Auflagefläche 15. Fig. 1 zeigt eine gedachte Verschiebung 44 der Schneidkante 12, bei der eine Zahnspitze 14' bezogen auf die Laufrichtung 21 senkrecht über der Längsmittelachse 18 der hinteren Lagerstelle 17 liegt. Die gedachte Verschiebung 44 entspricht der Kontur der Schneidkante 12 in der gezeigten Seitenansicht, wenn die Schneidkante 12 bis in die gezeigte Lage nachgeschärft wird. Fig. 1 und Fig. 2 zeigen dabei Seitenansichten auf die Sägekette 1 in Blickrichtung der Längsmittelachsen 18.

Wie Fig. 2 zeigt, ist an der der Lagerstellenebene 18 abgewandten Oberseite des Dachabschnitts 11 eine zweite Schneidkante 13 ausgebildet. Die erste Schneidkante 12 und die zweite Schneidkante 13 sind Kanten einer Schneidfläche 20, die zur gezeigten Seitenansicht geneigt verläuft. Die Schneidfläche 20 besitzt einen ersten Schneidflächenabschnitt 22, der unmittelbar an die Auflagefläche 15 angrenzt, sowie einen zweiten Schneidflächenabschnitt 23, der sich am Dachabschnitt 11 und in den darunter liegenden Bereich des Seitenabschnitts 10 erstreckt. An der Zahnspitze 14 treffen sich die Schneidkanten 12 und 13.

Als Schneidfläche 20 wird vorliegend der gesamte Bereich zwischen der Auflagefläche 15 und der zweiten Schneidkante 13 bezeichnet. Die Schneidfläche 20 muss dabei nicht vollständig mit einem zu bearbeitenden Werkstück in Kontakt kommen. Insbesondere kommt der erste Schneidflächenabschnitt 22 nicht oder nur teilweise mit einem zu bearbeitenden Werkstück in Kontakt. Die erste Schneidkante 12 verläuft an der Schneidfläche 20 an einer Seite des Schneidzahns 7 und setzt sich im Ausführungsbeispiel aus zwei geraden Schneidkantenabschnitten zusammen. Die erste Schneidkante 12 erstreckt sich von der Auflagefläche 15 bis zur Zahnspitze 14 und kommt im Ausführungsbeispiel vorteilhaft nur über einen Teil ihrer Länge mit dem zu bearbeitenden Werkstück in Kontakt. Die erste Schneidkante 12 wird beim Nachschärfen über ihre gesamte Länge nachgeschärft.

Die Schneidflächenabschnitte 22 und 23 sind im Ausführungsbeispiel jeweils eben ausgebildet und treffen an einer Schneidflächenkante 24 aufeinander. Die Schneidflächenkante 24 verläuft parallel zur Auflagefläche 15. Im Ausführungsbeispiel ist die Schneidflächenkante 24 in Querrichtung der Sägekette 1 parallel zu den Längsmittelachsen 18 der Lagerstellen 16 und 17 ausgerichtet. Der Dachabschnitt 11 besitzt eine der Lagerstellenebene 19 zugewandte Unterseite 27. Die Unterseite 27 besitzt einen senkrecht zur Laufrichtung 21 gemessenen Abstand a zur Auflagefläche 15. Der Abstand a ist dabei der kleinste Abstand der Unterseite 27 zur Auflagefläche 15 und im Ausführungsbeispiel an dem in Laufrichtung 21 hinten liegenden Bereich des Dachabschnitts 11 gemessen. Die Auflagefläche 15 verläuft im Ausführungsbeispiel parallel zur Lagerstellenebene 19. Die Schneidflächenkante 24 besitzt zur Auflagefläche 15 einen senkrecht zur Laufrichtung 21 gemessenen Abstand b, der kleiner oder geringfügig größer als der Abstand a ist. Vorteilhaft ist der Abstand b um weniger als 2 mm größer als der Abstand a. In dem in den Fig. 1 und 2 gezeigten ungeschärften Zustand besitzt die Zahnspitze 14 zur Schneidflächenkante 24 einen senkrecht zur Laufrichtung gemessenen Abstand c. Im Ausführungsbeispiel sind die Abstände b und c in ungeschärftem Zustand näherungsweise gleich groß.

Die Auflagefläche 15 besitzt zur Lagerstellenebene 19 einen Abstand g. An der dem Schneidglied 3 abgewandten Seite der Treibglieder 2 ist ein Verbindungsglied 4 angeordnet. Das Verbindungsglied 4 besitzt eine Oberseite 38, die auf der gleichen Seite der Lagerstellenebene 19 liegt wie der Schneidzahn 7. Die Oberseite 38 besitzt zur Lagerstellenebene 19 einen Abstand f, der kleiner als der Abstand g ist. Dadurch liegt die Oberseite 38 des Verbindungsglieds 4, das neben dem Schneidglied 3 angeordnet ist, niedriger als die Auflagefläche 15, also in Richtung auf die Lagerstellenebene 15 hin versetzt. Die Treibglieder 2 besitzen eine Oberseite 39, die zur Lagerstellenebene 19 einen Abstand o besitzt. Auch der Abstand o ist im Ausführungsbeispiel kleiner als der Abstand g. Im Ausführungsbeispiel ist der Abstand o jedoch geringfügig größer als der Abstand f. Die Abstände f, g und o und die Ausrichtung der Auflagefläche 15 sind so gewählt, dass eine Feile zum Nachschärfen des Schneidzahns 7 auch in vollständig nachgeschärftem Zustand nicht mit der Oberseite 38 des Verbindungsglieds 4 oder der Oberseite 39 des Treibglieds 2 in Kontakt kommt, wenn die Feile auf der Auflagefläche 15 geführt wird.

Wie Fig. 3 zeigt, durchragt der Verbindungsbolzen 5 das Schneidglied 3, das Verbindungsglied 4 sowie das mittig zwischen Schneidglied 3 und Verbindungsglied 4 angeordnete Treibglied 2. Wie Fig. 3 auch zeigt, verläuft die Auflageebene 15 in der gezeigten Schnittdarstellung senkrecht zur Laufrichtung 21 parallel zur Lagerstellenebene 19. In nicht nachgeschärftem Zustand ist die Auflagefläche 15 am ebenen Grundkörper 26 des Schneidglieds 3 angeordnet und erstreckt sich nicht in den aus der Grundkörperebene herausgebogenen Schneidzahn 7. Wie Fig. 3 auch zeigt, besitzt der Dachabschnitt 11 eine größte Dicke i. Die Dicke i ist senkrecht zur Lagerstellenebene 19 gemessen. Die Dicke des Dachabschnitts 11 nimmt vom Seitenabschnitt 10 in Richtung auf das freie Ende des Dachabschnitts 11 hin ab. Im Ausführungsbeispiel ist die Dicke i in Längsrichtung des Dachabschnitts 11, also in Laufrichtung 21, konstant. Es kann jedoch auch vorgesehen sein, dass die Dicke i in Laufrichtung 21 abnimmt oder zunimmt.

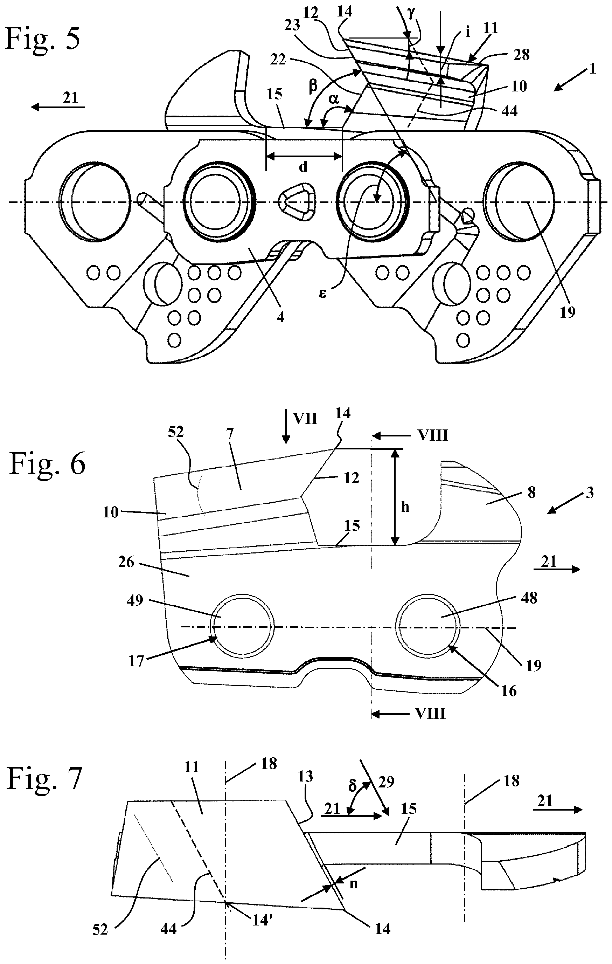

Fig. 4 zeigt den in den Fig. 1 und 2 gezeigten Abschnitt der Sägekette 1 in einer perspektivischen Darstellung mit einer Blickrichtung in einer Schärfrichtung 29, die in Fig. 7 gezeigt ist. Die Schärfrichtung 29 ist die Richtung, in der eine Feile zum Nachschärfen des Schneidzahns 7 zu führen ist. Die Schneidfläche 20 und die Auflagefläche 15 sind parallel zur Schärfrichtung 29 ausgerichtet und erscheinen in der Seitenansicht in Schärfrichtung 29 als Linien. Im Ausführungsbeispiel liegt die Schärfrichtung 29 zur Laufrichtung 21 um einen Winkel δ geneigt, der kleiner als 90° ist. Der Winkel δ ist in Fig. 7 gezeigt und beträgt vorteilhaft 20° bis 80°, insbesondere 40° bis 70°.

Wie Fig. 4 zeigt, besitzt der Dachabschnitt 11 in der Seitenansicht mit Blickrichtung in Schärfrichtung 29 eine Oberkante 28. Die Oberkante 28 ist der von der Lagerstellenebene 19 entfernt liegende, in der Seitenansicht als Linie erscheinende Abschnitt des Dachabschnitts 11. In Fig. 4 ist eine gedachte Linie 31 eingezeichnet, die parallel zur Oberkante 28 verläuft. Die gedachte Linie 31 besitzt zur Oberkante 28 einen Abstand k, der senkrecht zur Lagerstellenebene 19 gemessen ist und der mindestens so groß ist wie die größte Dicke i des Dachabschnitts 11 (Fig. 3). Die gedachte Linie 31 liegt demnach an der Unterseite 27 oder unterhalb der Unterseite 27 des Dachabschnitts 11. Vorteilhaft ist der Abstand k mindestens um 0,8 mm größer als die maximale Dicke i.

In der in Fig. 4 gezeigten Seitenansicht ist ein erster Schnittpunkt 32 eingezeichnet, der der Schnittpunkt der Oberkante 28 mit der Schneidfläche 20 ist. Ein zweiter Schnittpunkt 33 ist der Schnittpunkt der Schneidfläche 20 mit der gedachten Linie 31. Die beiden Schnittpunkte 32 und 33 sind in Fig. 4 durch eine erste, gedachte Verbindungslinie 36 verbunden. Die erste Verbindungslinie 36 liegt im Ausführungsbeispiel vollständig in der Schnittfläche 20. Es kann auch vorgesehen sein, dass die Schnittfläche 20 gebogen verläuft, so dass die erste Verbindungslinie 36 nicht vollständig in der Schnittfläche 20 liegt. Die erste Verbindungslinie 36 gibt die Neigung des Schneidzahns 7 im Bereich des Dachabschnitts 11 genau oder näherungsweise an.

Durch das Nachschärfen des Schneidzahns 7 verlagert sich die Schneidfläche 20 parallel zur Auflagefläche 15 und entlang der Verlängerung der Auflagefläche 15 relativ zum Grundkörper 26 des Schneidglieds 3. Die verlagerte Schneidfläche 20 ist als gedachte Verschiebung 44 in Fig. 4 mit gestrichelter Linie dargestellt. Die in Fig. 4 gezeigte gedachte Verschiebung 44 entspricht einer Lage des Schneidzahns 7, bei der die Zahnspitze 14' der gedachten Verschiebung 44 in einer Draufsicht senkrecht zur Lagerstellenebene 19 auf der Längsmittelachse 18 der hinteren Lagerstelle 17 liegt. Aufgrund der perspektivischen Darstellung liegt die Längsmittelachse 18 in Fig. 4 zur Blattebene nicht senkrecht. Die tatsächliche Anordnung ist in der Draufsicht in Fig. 7 erkennbar. In der gezeigten Seitenansicht ist ein dritter Schnittpunkt 34 der Schnittpunkt der Verschiebung 44 mit der Oberkante 28, und ein vierter Schnittpunkt 35 ist der Schnittpunkt der Verschiebung 44 mit der gedachten Linie 31. Die Schnittpunkte 34 und 35 sind durch eine zweite, gedachte Verbindungslinie 37 miteinander verbunden. Dadurch, dass sowohl der zweite Schnittpunkt 33 als auch der vierte Schnittpunkt 35 am gleichen, zweiten Schneidflächenabschnitt 23 (Fig. 3) liegen und der zweite Schneidflächenabschnitt 23 eben ausgebildet ist, verlaufen die Verbindungslinien 35 und 36 parallel zueinander. Im Ausführungsbeispiel ist der Abstand k so gewählt, dass der vierte Schnittpunkt 35 an der verschobenen Schneidflächenkante 24' liegt. Die Schneidflächenkante 24 bewegt sich beim Nachschärfen parallel zur Auflageebene 15. Wird der Abstand k größer gewählt, so sind die Verbindungslinien 36 und 37 nicht mehr parallel zueinander, da der zweite Schnittpunkt 33 im zweiten Schneidflächenabschnitt 23 liegt und der vierte Schnittpunkt 35 beim Nachschärfen in den ersten Schneidflächenabschnitt 22 wandert und die zweite Verbindungslinie 37 dadurch einen steileren Verlauf erhält als die erste Verbindungslinie 36.

Fig. 5 zeigt den Abschnitt der Sägekette 1 in perspektivischer Darstellung in Schärfrichtung 29 von der gegenüberliegenden Seite der Sägekette 1. In dieser Ansicht liegt das Verbindungsglied 4 in Blickrichtung vor dem Schneidglied 3. Wie Fig. 5 zeigt, schließt der erste Schneidflächenabschnitt 22, der vollständig am Seitenabschnitt 10 des Schneidzahns 7 ausgebildet ist, mit der Auflagefläche 15 einen Winkel α ein. Der Winkel α ist größer als 90°. Im Ausführungsbeispiel ist ein Winkel α von 100° bis 160°, insbesondere von 110° bis 140°, vorzugsweise von etwa 120° vorgesehen. Die Auflagefläche 15 schließt mit dem zweiten Schneidflächenabschnitt 23, an dem die Zahnspitze 14 angeordnet ist, einen Winkel β ein, der kleiner als 90 ° ist. Vorteilhaft beträgt der Winkel β 20° bis 80°, insbesondere 40° bis 70°, bevorzugt etwa 60°. Durch die Winkel α und β ist ein Hinterschnitt am Schneidzahn 7 gebildet. Der in Laufrichtung 21 am weitesten hinten liegende Bereich der Schneidfläche 20 liegt zwischen der Dachschneide 13 und der Auflagefläche 15. Dadurch kann sowohl eine ausreichend breite Anbindung des Schneidzahns 7 am Zahnfuß 25 (Fig. 1) als auch ein günstiger Schneidwinkel ε erreicht werden. Im Ausführungsbeispiel ist die Auflagefläche 15 parallel zur Lagerstellenebene 19 ausgerichtet. Der zweite Schneidflächenabschnitt 23 schließt mit der Lagerstellenebene 19 den Schneidwinkel ε ein, der dem Winkel β entspricht. Der Schneidwinkel ε ist vorteilhaft für eine gute Zerspanung und Spanabfuhr ausgelegt. Der Schneidwinkel ε entspricht dem Winkel, den die Verbindungslinien 36 bzw. 37 mit der Lagerstellenebene 19 einschließen, da die Verbindungslinien 36 und 37 im Ausführungsbeispiel vollständig in dem zweiten Schneidflächenabschnitt 23 liegen. Die Schneidfläche 20 besitzt im ersten Schneidflächenabschnitt 22 eine Normale, die mit der Auflagefläche 15 und der Lagerstellenebene 19 einen von 0° und von 90° verschiedenen Winkel einschließt. Entsprechend besitzt der zweite Schneidflächenabschnitt 23 eine Normale, die mit der Auflagefläche 15 und der Lagerstellenebene 19 einen von 0° und von 90° verschiedenen Winkel einschließt.

Wie Fig. 5 zeigt, ist die Oberkante 28 zur Laufrichtung 21 ebenfalls geneigt. Die Oberkante 28 fällt dabei in Laufrichtung 21 ab. Die Oberkante 28 schließt mit der Laufrichtung 21 einen Freiwinkel γ ein, der in Fig. 5 zu einer Parallelen zur Laufrichtung 21 eingezeichnet ist. Der Freiwinkel γ beträgt vorteilhaft mindestens 3°, insbesondere mindestens 5°. Wie Fig. 5 auch zeigt, besitzt die Auflagefläche 15 in der gezeigten Seitenansicht eine in Laufrichtung 21 gemessene Länge d.

Fig. 6 zeigt das Schneidglied 3 in Seitenansicht. Wie Fig. 6 zeigt, besitzt der Grundkörper 26 des Schneidglieds 3 eine vordere Lagerstelle 48 und eine hintere Lagerstelle 49, die im Ausführungsbeispiel als Öffnungen für die Verbindungsbolzen 5 ausgebildet sind. Auch eine andere Verbindung des Schneidglieds 3 mit benachbarten und den vorlaufenden und nachlaufenden Treibgliedern 2 und Verbindungsgliedern 4 kann jedoch vorteilhaft sein.

Wie Fig. 6 auch zeigt, besitzt der Schneidzahn 7 eine Höhe h, die von der Zahnspitze 14 zur Auflagefläche 15 und senkrecht zur Lagerstellenebene 19 gemessen ist. In den Fig. 6 und 7 ist eine Markierung 52 am Seitenabschnitt 10 und am Dachabschnitt 11 erkennbar, die die Lage der Schneidfläche 20 in maximal nachgeschärftem Zustand des Schneidglieds 3 zeigt.

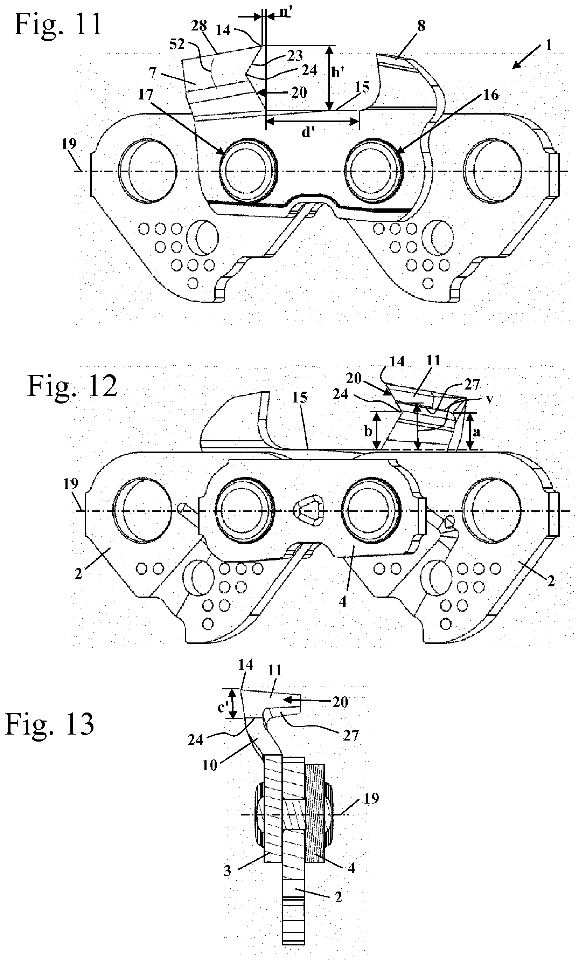

Wie Fig. 7 zeigt, liegt die Schneidkante 13 in Laufrichtung 21 in nicht nachgeschärftem Zustand hinter der Auflagefläche 15. Die Schneidkante 13 liegt dabei in einer Draufsicht senkrecht zur Lagerstellenebene 19, wie in Fig. 7 gezeigt ist, in jedem Bereich hinter dem in Laufrichtung jeweils vorlaufenden Abschnitt der Auflagefläche 15. Die Zahnspitze 14 liegt in der in Fig. 6 gezeigten Seitenansicht über der Auflagefläche 15, jedoch, wie Fig. 7 zeigt, seitlich versetzt hierzu. Die zweite Schneidkante 13 besitzt zur Auflagefläche 15 einen in Blickrichtung senkrecht zur Lagerstellenebene 19 und senkrecht zur Schneidkante 13 gemessenen Abstand n. Der Abstand n ergibt sich in einer Seitenansicht in Schärfrichtung 29 als parallel zur Lagerstellenebene 19 gemessener Abstand zwischen der Zahnspitze 14 und der Auflagefläche 15. Der Abstand n ist vergleichsweise klein und beträgt an jeder Stelle der Schneidkante 13 vorteilhaft höchstens ein Drittel, insbesondere höchstens ein Viertel der Höhe h des Schneidzahns 7. Vorteilhaft beträgt der Abstand n in jedem Nachschärfzustand höchstens ein Drittel, insbesondere höchstens ein Viertel der aktuellen Höhe h des Schneidzahns 7. Durch den Freiwinkel γ (Fig. 5) verringert sich mit zunehmendem Nachschärfgrad die Höhe h des Schneidzahns 7, und der Abstand n vergrößert sich. In Fig. 11 sind die Höhe h' und der Abstand n' für den in Fig. 11 gezeigten Nachschärfzustand eingezeichnet. Im nicht nachgeschärften Ausgangszustand beträgt der Abstand n vorteilhaft weniger als 10% der Zahnhöhe h. In vollständig nachgeschärftem Zustand beträgt der Abstand n vorteilhaft 15% bis 30%, insbesondere 20% bis 25% der Zahnhöhe h.

In Fig. 7 ist die Lage der Zahnspitze 14' in der gedachten Verschiebung 44 der Schneidfläche 20 gezeigt. Wie Fig. 7 zeigt, liegt die Zahnspitze 14' der gedachten Verschiebung 44 in der Draufsicht senkrecht zur Lagerstellenebene 19 auf der Längsmittelachse 18 der hinteren Lagerstelle 17.

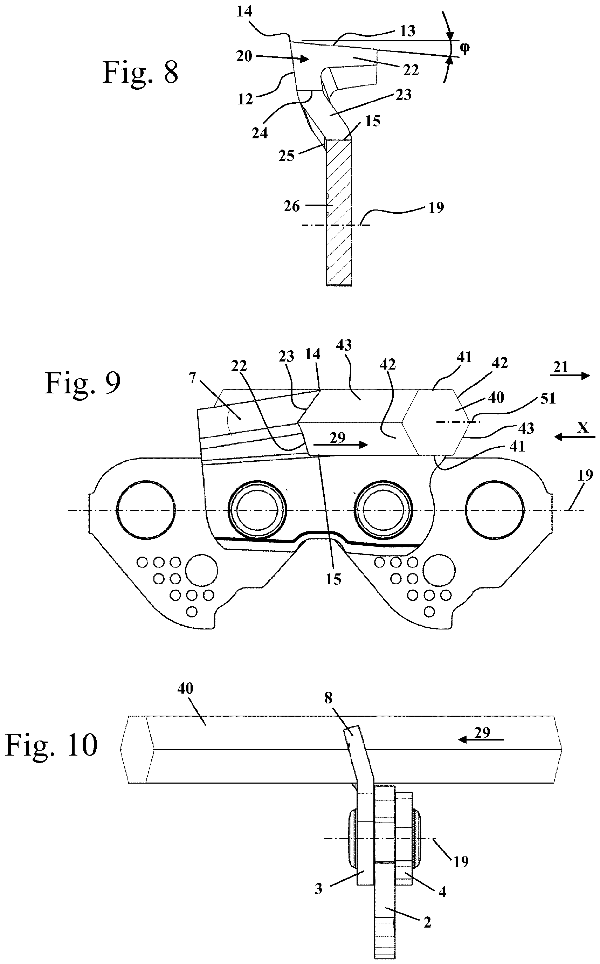

In Fig. 8 ist die Ausrichtung der Schneidflächenkante 24 und der Auflagefläche 15 in Blickrichtung in Laufrichtung 21 parallel zur Lagerstellenebene 19 gezeigt. Wie Fig. 8 außerdem zeigt, verläuft die Schneidkante 13 zur Lagerstellenebene 19 in Blickrichtung in Laufrichtung 21 unter einem Winkel ϕ. Der Winkel ϕ beträgt vorteilhaft mehr als 2°, insbesondere mehr als 5°. Der Winkel ϕ beträgt vorteilhaft weniger als 20°. Der Abstand der Schneidkante 13 zur Lagerstellenebene 19 verringert sich dabei mit steigendem Abstand von der Zahnspitze 14.

In den Fig. 9 und 10 ist eine Feile 40 zum Nachschärfen des Schneidglieds 3 schematisch an der Sägekette 1 dargestellt. Die Feile 40 besitzt einen Querschnitt in Form eines regelmäßigen Sechsecks. In den gezeigten Seitenansichten verläuft die Schärfrichtung 29 parallel zur Lagerstellenebene 19. Gegenüber der Blattebene ist die Schärfrichtung 29 jedoch geneigt (s. Fig. 7). Wie Fig. 9 zeigt, besitzt die Feile 40 eine Längsmittelachse 51, die in Schärfrichtung 29 ausgerichtet ist. Die Feile 40 besitzt zwei einander gegenüberliegende, unbehauene Führungsflächen 41, zwei einander gegenüberliegende, in Umfangsrichtung jeweils an eine Führungsfläche 41 angrenzende erste Feilenflächen 42 und zwei einander gegenüberliegende, an die ersten Feilenflächen in Umfangsrichtung angrenzende zweite Feilenflächen 43. An die zweiten Feilenflächen 43 grenzt an der der ersten Feilenfläche 42 entfernt liegenden Seite jeweils eine Führungsfläche 41 an. Die Führungsflächen 41 sind zur Auflage auf der Auflagefläche 15 vorgesehen. Die ersten Feilenflächen 42 sind zum Feilen des ersten Schneidflächenabschnitts 22 und die zweiten Feilenflächen 43 zum Feilen des zweiten Schneidflächenabschnitts 23 vorgesehen. Die Feile 40 kann in zwei zueinander um 180° um die Längsmittelachse 51 gedrehten Lagen auf der Auflagefläche 15 aufgesetzt und zum Feilen eingesetzt werden.

Wie Fig. 9 zeigt, erstreckt sich die Feile 40 in nicht nachgeschärftem Zustand des Schneidzahns 7 in Richtung senkrecht zur Auflagefläche 15 mindestens bis zur Zahnspitze 14. Die Feile 40 erstreckt sich in Höhenrichtung von der Auflagefläche 15 bis mindestens zur Zahnspitze 14. Die Feile 40 erstreckt sich über die gesamte Höhe h (Fig. 6) des Schneidzahns 7. Im Ausführungsbeispiel ist die Auflagefläche 15 parallel zur Lagerstellenebene 19 ausgerichtet. Beim Nachschärfen wird die Feile 40 deshalb in Gegenrichtung zur Laufrichtung 21 und parallel zur Lagerstellenebene 19 nachgeführt. Die Feile 40 wird auf der Auflagefläche 15 entgegen der Laufrichtung 21 nachgeführt. Die Feile 40 wird entlang ihrer Längsmittelachse 51 auf der Auflagefläche 15 hin und her bewegt und dabei entgegen der Laufrichtung 21 gegen die Schneidfläche 20 (Fig. 8) gedrückt und nachgeführt. Dadurch, dass die Feilenfläche 42 unmittelbar an die unbehauene Auflagefläche 41 angrenzt, wird der Schneidflächenabschnitt 22 bis an die Auflagefläche 15 nachgeschärft, und die Feile 40 kann entlang der Auflagefläche 15 nachgeführt werden. Durch das Nachführen der Feile 40 entlang der Auflagefläche 15 verlängert sich die Auflagefläche 15 beim Nachschärfen der Schneidfläche 20 (Fig. 8). Dadurch, dass die Führungsfläche 41 nicht behauen ist, wird die Auflagefläche 15 nicht nachgeschärft, so dass die Lage und Ausrichtung der Auflagefläche 15 erhalten bleiben. Dadurch ist ein einfaches Nachschärfen selbst für einen ungeübten Benutzer möglich. Der Benutzer muss lediglich die Anlage der Feile 40 an der Auflagefläche 15 und der Schneidfläche 20 sicherstellen. Der Benutzer setzt die Feile 40 auf die Auflagefläche 15 auf und bewegt die Feile 40 auf der Auflagefläche 15 in Schärfrichtung 29. Ein Abheben der Feile 40 von der Auflagefläche 15 oder ein Kippen der Feile 40 gegenüber der Auflagefläche 15 ist während des Nachschärfens nicht vorgesehen.

Die Fig. 11 bis 13 zeigen die Sägekette 1 in einem ersten Nachschärfzustand, in dem die Auflagefläche eine Länge d' besitzt, die größer als die Länge d ist. Aufgrund der Neigung der Oberkante 28 des Dachabschnitts 11 hat sich durch das Nachschärfen der Abstand der Zahnspitze 14 zur Lagerstellenebene 19 verringert. Der Abstand der Schneidflächenkante 24 zur Lagerstellenebene 19 ist unverändert, so dass die Höhe des zweiten Schneidflächenabschnitts 23 beim Nachschärfen abgenommen hat. Der erste Schneidflächenabschnitt 22 ist in Länge und Ausrichtung unverändert. Lediglich die Lage bezogen auf die Lagerstellen 16 und 17 hat sich geändert.

Wie Fig. 12 zeigt, besitzt die Unterseite 27 des Dachabschnitts 11 zur Auflageebene 15 einen senkrecht zur Lagerstellenebene 19 gemessenen kleinsten Abstand a. Im gezeigten Nachschärfzustand besitzt die Unterseite 27 an der Schneidfläche 20 einen Abstand v zur Auflageebene, der größer als der Abstand b ist.

Wie Fig. 13 zeigt, liegt die Schneidflächenkante 24 im gezeigten Nachschärfzustand unterhalb der Unterseite 27 des Dachabschnitts 11, also in geringerem Abstand zur Lagerstellenebene 19 als die Unterseite 27. Die Schneidflächenkante 24 und die Unterseite 27 sind dabei seitlich versetzt zueinander angeordnet. Die Schneidflächenkante 24 befindet sich in dem gezeigten Nachschärfzustand vollständig im Seitenabschnitt 11 des Schneidglieds 3. Der Abstand der Zahnspitze 14 zur Schneidflächenkante 24 hat sich auf den Abstand c' verringert, der kleiner als der Abstand c in nicht nachgeschärftem Zustand (Fig. 2) ist.

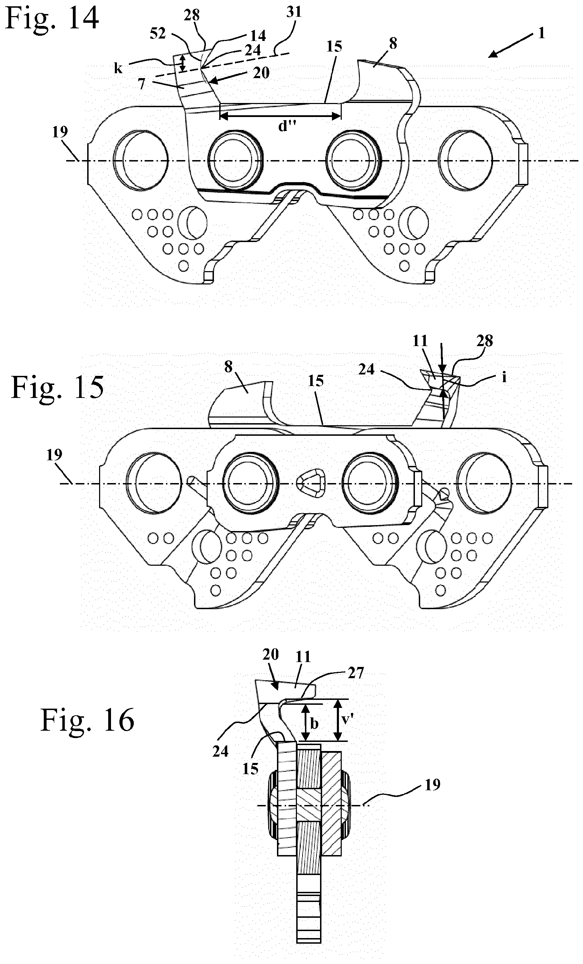

Die Fig. 14 bis 16 zeigen die Sägekette 1 in vollständig nachgeschärftem Zustand des Schneidzahns 7. Der vollständig nachgeschärfte Zustand ist dabei vorteilhaft der Zustand, in dem der verbleibende Rest des Schneidzahns 7 gerade noch ausreichend dimensioniert ist, um die auftretenden Schneidkräfte aufzunehmen. Die Schneidfläche 20 ragt bis an die Markierung 52. In Fig. 14 sind auch die gedachte Linie 31 und der Abstand k eingezeichnet. Wie Fig. 14 und 15 zeigen, ist der Abstand k so gewählt, dass auch in vollständig nachgeschärftem Zustand der Abstand k größer als die Dicke i des Dachabschnitts 11 ist. Der Betrag des Abstands k entspricht dem senkrecht zur Lagerstellenebene 19 gemessenen Abstand zwischen der Schneidflächenkante 24 und der Oberkante 28 des Dachabschnitts 11 in vollständig nachgeschärftem Zustand. Die Auflagefläche 15 besitzt eine Länge d", die größer als die Länge d' und die Länge d ist. Wie Fig. 16 zeigt, ist der Abstand b der Schneidflächenkante 24 zur Auflagefläche 15 auch in diesem Nachschärfzustand kleiner als der Abstand v' der Unterseite 27 des Dachabschnitts 11 an der Schneidfläche 20 zur Auflagefläche 19. Die Schneidflächenkante 24 liegt demnach unterhalb des Dachabschnitts 11. Der Abstand hat sich gegenüber dem Nachschärfzustand aus den Fig. 11 bis 13 vom Abstand v auf den Abstand v' verringert. In vollständig nachgeschärftem Zustand kann es zweckmäßig sein, dass der Abstand v' dem Abstand b entspricht, so dass die Schneidflächenkante 24 auf der Höhe der Unterseite 27 des Dachabschnitts 11 liegt. Die Schneidflächenkante 24 liegt in bevorzugter Ausführung in allen zulässigen Nachschärfzuständen mit Abstand zum Dachabschnitt 11.

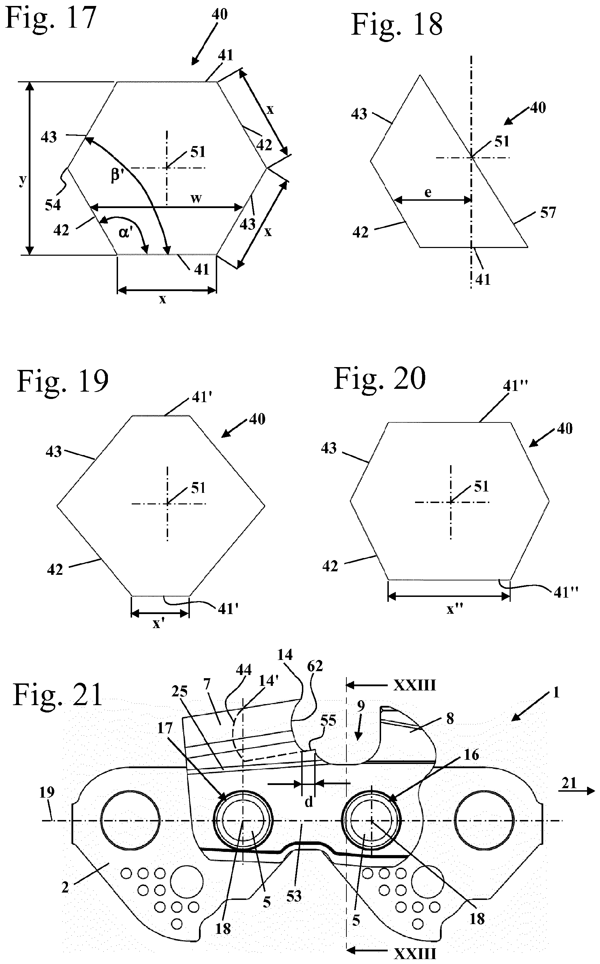

Die Fig. 17 bis 20 zeigen Ausführungsbeispiele für eine Feile 40 zum Feilen des in den Fig. 1 bis 16 gezeigten Schneidzahns 7. Fig. 17 zeigt eine Feile 40, deren Querschnitt als regelmäßiges Sechseck ausgebildet ist. Die Führungsfläche 41 besitzt ein Kantenmaß x. Im Ausführungsbeispiel ist das Kantenmaß x die Länge der Führungsfläche 41 in einem Querschnitt senkrecht zur Längsmittelachse 51. Die Länge der Führungsfläche 41 kann von der Länge der Auflagefläche 15 verschieden sein. Vorteilhaft weist die Auflagefläche 15 im Ausgangszustand eine Länge von mindestens einem Drittel der Länge der Führungsfläche 41 auf. Die Feilenflächen 42 und 43 besitzen das gleiche Kantenmaß x. Die Führungsfläche 41 schließt mit der in Umfangsrichtung angrenzenden Feilenfläche 42 einen Winkel α' ein, der im Ausführungsbeispiel 60° beträgt. Der Winkel α' ist auf den Winkel α des Schneidglieds 3 abgestimmt und genau so groß wie dieser. Die Führungsfläche 41 schließt mit der in Umfangsrichtung an die Feilenfläche 42 anschließenden zweiten Feilenfläche 43 einen Umfangswinkel β' ein, der im Ausführungsbeispiel 60° beträgt. Der Winkel β' ist auf den Winkel β des Schneidglieds 2 abgestimmt und genau so groß wie dieser. Der Abstand y zwischen den gegenüberliegenden Führungsflächen 41 ist doppelt so groß wie der Abstand b der Schneidflächenkante 24 des Schneidglieds 3 zur Auflage 15. Die Längskante 54 zwischen den Feilenflächen 42 und 43 liegt in der Schneidflächenkante 24, wenn die Feile 40 zum Nachschärfen der Schneidfläche 20 genutzt wird.

Bei dem in Fig. 17 gezeigten Ausführungsbeispiel sind jeweils zwei Führungsflächen 41 und jeweils zwei Feilenflächen 42 bzw. 43 vorgesehen, so dass die Feile 40 in zwei um 180° um die Längsmittelachse 51 gedrehten Lagen zum Feilen des Schneidzahns 7 eingesetzt werden kann. Die Feile 40 besitzt eine parallel zur Führungsfläche 41 gemessene Breite w. In einem ersten, an die Führungsfläche 41 anschließenden Bereich, der sich bis auf die Höhe der Längskante 54 und der Längsmittelachse 51 erstreckt, vergrößert sich die Breite w mit steigendem Abstand von der Führungsfläche 41. In einem zweiten Bereich, der sich von der durch die Längsmittelachse 51 und den Längskanten 54 definierten Ebene auf die der unteren Führungsfläche 41 abgewandte Seite erstreckt, verringert sich die Breite w mit steigendem Abstand von der unteren Führungsfläche 41. Die Längskante 54 ist der Bereich mit der größten Breite w.

Fig. 18 zeigt ein Ausführungsbeispiel einer Feile 40, die nur eine Führungsfläche 41, eine erste Feilenfläche 42 und eine zweite Feilenfläche 43 besitzt, die in Umfangsrichtung angrenzend aneinander angeordnet sind. Die Abmessungen und Ausrichtungen der Auflagefläche 41 und der beiden Feilenflächen 42 und 43 entsprechen vorteilhaft denen des Ausführungsbeispiels nach Fig. 17. Der Querschnitt der Feile 40 aus Fig. 18 besitzt die Form eines halben Sechsecks. Die der Feilenfläche 42 gegenüberliegende Längsseite 57 ist im Ausführungsbeispiel eben ausgebildet. Die Längsseite 57 ist ohne Funktion und kann deshalb jede beliebige Form annehmen. Die Feile 40 besitzt eine Mittelebene 30, die die Längsmittelachse 51 enthält und senkrecht zur Führungsfläche 41 ausgerichtet ist. Im Bereich der ersten Feilenfläche 42 vergrößert sich der parallel zur Führungsfläche 41 gemessene Abstand der Feilenfläche 42 zur Mittelebene. Im Bereich der zweiten Feilenfläche 43 verringert sich der Abstand e der Feilenfläche 43 zur Mittelebene 30 mit steigendem Abstand zur Führungsfläche 41. Dadurch wird eine Geometrie der Schneidfläche 20 mit einem Hinterschnitt erzielt.

Fig. 19 zeigt ein Ausführungsbeispiel einer Feile 40, bei dem Führungsflächen 41 vorgesehen sind, die ein verringertes Kantenmaß x' besitzen. Das Kantenmaß x' beträgt vorteilhaft mindestens 3 mm. Auch das Kantenmaß x und das Kantenmaß x" für das Ausführungsbeispiel aus Fig. 20 betragen vorteilhaft mindestens 3 mm, um eine ausreichende Auflage der Feile 40 an der Auflagefläche 15 zu erreichen. Beim Ausführungsbeispiel nach Fig. 20 sind Führungsflächen 41" vorgesehen, die gegenüber den Führungsflächen 41 aus Fig. 17 ein vergrößertes Kantenmaß x" besitzen. Bis auf das Kantenmaß x' bzw. x" entsprechen die Feilen 40 aus den Fig. 19 und 20 dem Ausführungsbeispiel nach Fig. 17. Funktionsrelevant sind insbesondere die Länge der zweiten Feilenfläche 42 und die Ausrichtung der zweiten Feilenfläche 42 gegenüber der Führungsfläche 41'. Die Form, Länge und Ausrichtung der ersten Feilenfläche 42 gegenüber der Führungsfläche 41' können auch anders als dargestellt gewählt sein. Die Feile 40 kann insbesondere auch asymmetrisch gestaltet sein. Das Verhältnis der Summe der Längen der unbehauenen Führungsflächen 41 zur Summe der Längen der Feilenflächen 42, 43 ist vorteilhaft größer als ein Viertel, insbesondere größer als ein Drittel, vorzugsweise größer als die Hälfte.

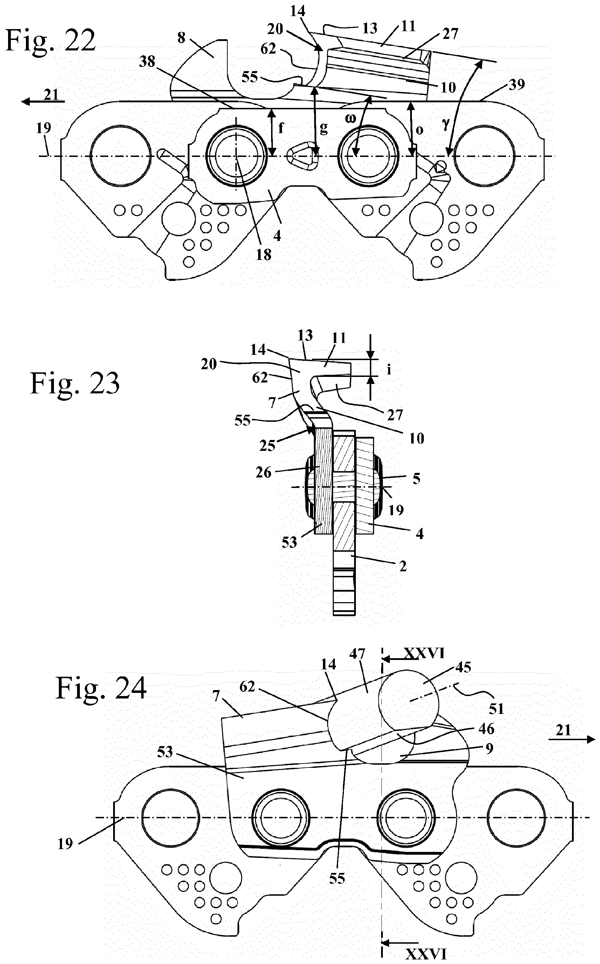

Die Fig. 21 bis 31 zeigen ein Ausführungsbeispiel einer Sägekette 1 mit einem Schneidglied 53. Gleiche Bezugszeichen bezeichnen in allen Figuren einander entsprechende Elemente. Die Sägekette 1 aus Fig. 21 ist entsprechend zu der Sägekette 1 aus den vorangegangenen Figuren aufgebaut. Die Sägekette 1 unterscheidet sich vom vorangegangenen Ausführungsbeispiel in der Gestaltung des Schneidzahns 7 des Schneidglieds 53. Der Schneidzahn 7 besitzt eine erste Schneidkante 62, die, wie Fig. 21 zeigt, im Unterschied zur ersten Schneidkante 12 gebogen verläuft. Die erste Schneidkante 62 ist seitlich angeordnet. Vorlaufend zur ersten Schneidkante 62 ist eine Auflagefläche 55 ausgebildet. Die Auflagefläche 55 bildet in diesem Ausführungsbeispiel einen Teil des Bodens der Aussparung 9. Die Auflagefläche 55 erstreckt sich jedoch nur über einen Abschnitt des Bodens der Aussparung 9. Die in Laufrichtung 21 gemessene Länge d der Auflagefläche 55 beträgt mindestens 3 mm. Beim Nachschärfvorgang verschiebt sich die erste Schneidkante 62 gemeinsam mit der in Fig. 22 gezeigten Schneidfläche 20 entgegen der Laufrichtung 21 und parallel zur Auflagefläche 55. In Fig. 21 ist eine gedachte Verschiebung 44 der Schneidfläche 20 gezeigt, bei der die Zahnspitze 14' der gedachten Verschiebung 44 senkrecht zur Lagerstellenebene 19 über der Längsmittelachse 18 der hinteren Lagerstelle 17 liegt. Die Verschiebung erfolgt dabei in Verlängerung der Auflagefläche 55, also entlang einer Ebene, in der die Auflagefläche 55 liegt.

Wie Fig. 22 zeigt, ist die Auflagefläche 55 in Blickrichtung der Längsmittelachsen 18 der Lagerstellen 16 und 17 zur Lagerstellenebene 19 um einen Winkel ω geneigt. Im Ausführungsbeispiel entspricht der Winkel ω dem Winkel γ, um den die Oberkante 28 gegenüber der Lagerstellenebene 19 geneigt ist. Die Auflagefläche 55 verläuft demnach parallel zur Oberkante 28 des Dachabschnitts 11 des Schneidglieds 53. Der Winkel ω, um den die Auflagefläche 55 gegenüber der Lagerstellenebene 19 geneigt ist, beträgt vorteilhaft 2° bis 20°, insbesondere 5° bis 15°. Wie Fig. 22 auch zeigt, besitzt die Auflagefläche 55 zur Lagerstellenebene 19 einen senkrecht zur Lagerstellenebene 19 gemessenen Abstand g. Der Abstand g ist dabei der geringste Abstand der Auflagefläche 55 zur Lagerstellenebene 19 und im Ausführungsbeispiel aufgrund der Neigung der Auflagefläche 55 unmittelbar benachbart zur Schneidfläche 20 gemessen. Der Abstand g ist deutlich größer als der Abstand f der Oberseite 28 des benachbarten Verbindungsglieds 4 zur Lagerstellenebene 19. Die Differenz der Abstände g und f ist vorteilhaft so gewählt, dass der Abstand g auch im maximal nachgeschärften Zustand der Schneidfläche 20 noch größer als der Abstand f ist. Der Abstand g ist in vollständig nachgeschärftem Zustand vorteilhaft auch größer als der Abstand o der Oberseite 39 des Treibglieds 2 zur Lagerstellenebene 19.

Wie Fig. 22 auch zeigt, verläuft die Schneidfläche 20 gebogen, während die Auflagefläche 55 eben ausgebildet ist. Die Schneidfläche 20 ist als eine durchgehende, gekrümmte Fläche ausgebildet, an der sowohl die erste Schneidkante 62 als auch die zweite Schneidkante 13 ausgebildet sind. Die Schneidfläche 20 erstreckt sich auch in den Dachabschnitt 11. Wie Fig. 23 zeigt, besitzt der Dachabschnitt 11 eine maximale Dicke i sowie eine Unterseite 27. Der Schneidzahn 7 ist an einem Zahnfuß 25 mit dem ebenen Grundkörper 26 des Schneidglieds 53 verbunden, insbesondere an diesen angeformt.

Die Fig. 24 bis 26 zeigen eine nicht erfindungsgemäße Feile 45 zum Nachschärfen des Schneidglieds 53 am Schneidglied 53. Beim Nachschärfen wird die Feile 45 mit ihrer Längsmittelachse 51 in einer Nachschärfrichtung 29 ausgerichtet. Wie die Fig. 24 bis 26 zeigen, ist die Nachschärfrichtung 29 zur Lagerstellenebene 19 und zur Laufrichtung 21 geneigt.

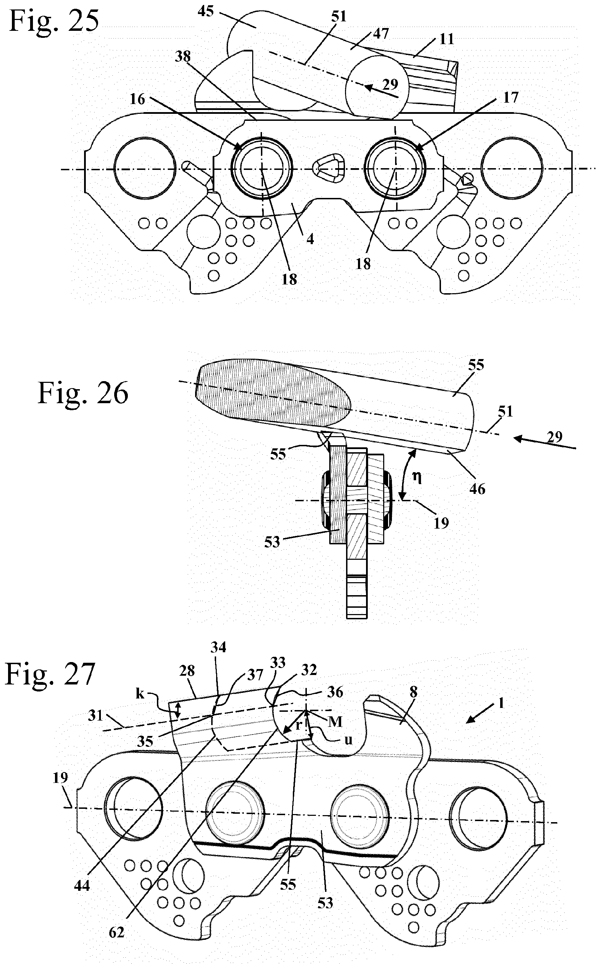

Die Feile 45 ist als Rundfeile mit einer abgeflachten Seite ausgebildet. An der Abflachung ist eine Führungsfläche 46 ausgebildet, an der die Feile 45 nicht behauen ist. An die ebene Führungsfläche 46 schließt eine gekrümmte Feilenfläche 47 an, die im Ausführungsbeispiel einen kreisbogenförmigen Querschnitt besitzt und die beiden Längsseiten der Führungsfläche 46 miteinander verbindet. An der Feilenfläche 47 besitzt die Feile 45 Zähne zur Bearbeitung, die an der Schneidfläche 20 eingreifen. Mit der Führungsfläche 46 liegt die Feile 45 auf der Auflagefläche 55 auf. Wie Fig. 26 zeigt, schließt die Führungsfläche 46 in einer Blickrichtung entgegen der Laufrichtung 21 mit der Lagerstellenebene 19 einen Winkel η ein, der vorteilhaft 2° bis 10°, insbesondere 3° bis 8° beträgt. Im Ausführungsbeispiel ist ein Winkel η von etwa 5° vorgesehen. Die Neigung der Führungsfläche 46 entspricht der Neigung der Auflagefläche 55 in der in Fig. 26 gezeigten Querrichtung des Schneidglieds 53. Die Auflagefläche 55 verläuft demnach weder in einer Blickrichtung in Laufrichtung 21 noch in einer Blickrichtung in Richtung der Längsmittelachse 18 der Lagerstellen 16 und 17 parallel zur Lagerstellenebene 19. Durch die vorgegebene räumliche Orientierung der Auflagefläche 55 wird dem Benutzer eine korrekte Ausrichtung der Feile 45 zum Schneidzahn 7 in zumindest einer Raumrichtung ermöglicht. Darüber hinaus wird dem Benutzer der Abstand, in dem die Feile 45 über die Lagerstellenebene 45 zu bewegen ist, vorgegeben, so dass ein gleichbleibender Schneidwinkel gewährleistet und eine Schwächung des Grundkörpers 26 des Schneidglieds 53 vermieden ist.

Fig. 27 zeigt die Sägekette 1 in perspektivischer Darstellung mit Blickrichtung in Nachschärfrichtung 29. In dieser Blickrichtung fällt die Schneidkante 62 mit der Schneidfläche 20 zusammen. In Fig. 27 ist auch die gedachte Verschiebung 44 der Schneidfläche 20 bzw. der Schneidkante 62 eingezeichnet. In dieser Blickrichtung verläuft die Schneidkante 62 als Kreisbogen in einem Radius r um einen Mittelpunkt M. Die Auflagefläche 55 besitzt einen senkrecht zur Auflagefläche 55 gemessenen Abstand u zum Mittelpunkt M. Der Abstand u ist vorteilhaft kleiner als der Radius r. Die Auflagefläche 55 ist dabei näher an der Lagerstellenebene 55 angeordnet als der Mittelpunkt M. Die Schneidkante 62 besitzt einen ersten Schnittpunkt 32, der der Schnittpunkt der Schneidkante 62 mit der Oberkante 28 des Dachabschnitts 11 ist. Ein zweiter Schnittpunkt 33 ist der Schnittpunkt einer gedachten Linie 31 mit der Schneidkante 62. Die gedachte Linie 31 besitzt zur Oberkante 28 einen Abstand k, der größer als die maximale Dicke i des Dachabschnitts 11 ist. Die Schnittpunkte 32 und 33 sind von einer gedachten Verbindungslinie 36 verbunden. Entsprechend ist ein dritter Schnittpunkt 34 an der gedachten Verschiebung 44 der Schnittpunkt der gedachten Verschiebung 44 mit der Oberkante 28 und ein vierter Schnittpunkt 35 der Schnittpunkt der gedachten Verschiebung 44 mit der gedachten Linie 31. Der dritte Schnittpunkt 34 und der vierte Schnittpunkt 35 sind mit einer Verbindungslinie 37 verbunden. Die Verbindungslinien 36 und 37 verlaufen parallel zueinander. Die Parallelität der Verbindungslinien 36 und 37 ergibt sich dadurch, dass die Auflagefläche 55 parallel zur Oberkante 28 verläuft. Der Bereich zwischen den Schnittpunkten 32 und 33 wird vom gleichen Umfangsabschnitt der Feile 45 gefeilt wie der Bereich zwischen den Schnittpunkten 34 und 35 in dem entsprechenden Nachschärfzustand. Dadurch ergibt sich die gleiche Neigung der Verbindungslinien 36 und 37. Im Bereich zwischen den Schnittpunkten 32 und 33 besitzt die Schneidfläche 20 Normalen, die mit der Auflagefläche 55 und der Lagerstellenebene 19 von 0° und von 90° verschiedene Winkel einschließen. In dem Bereich der Schneidfläche 20, der näher an der Lagerstellenebene 19 liegt als der Mittelpunkt M, besitzt die Schneidfläche 20 weitere Normalen, die mit der Auflagefläche 55 und der Lagerstellenebene 19 von 0° und von 90° verschiedene Winkel einschließen. Zwischen den beiden Bereichen ist eine Normale an die Schneidfläche 20 gegeben, die parallel zur Lagerstellenebene 19 verläuft.

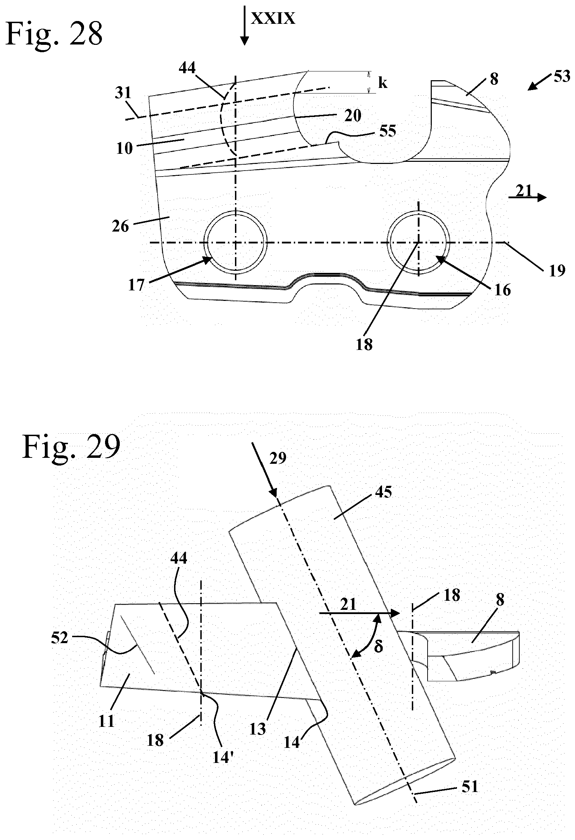

Fig. 28 zeigt das Schneidglied 53 in einer Seitenansicht mit Blickrichtung in Richtung der Längsmittelachsen 18 der Lagerstellen 16 und 17. Die Längsmittelachse 18 ist bei einer Sägekette 1, deren Kettenglieder über Verbindungsbolzen 5 miteinander verbunden sind, die Längsmittelachse der Verbindungsbolzen 5.

Fig. 29 zeigt die Ausrichtung der Schärfrichtung 29. Die Schärfrichtung 29 schließt mit der Laufrichtung 21 einen Winkel δ ein. Fig. 29 zeigt auch die Anordnung der gedachten Verschiebung 44, bei der die Zahnspitze 14' der gedachten Verschiebung 44 senkrecht zur Lagerstellenebene 19 oberhalb der Längsmittelachse 18 der hinteren Lagerstelle 17 angeordnet ist. Wie Fig. 29 auch zeigt, besitzt die Markierung 52 zur gedachten Verschiebung 44 einen Abstand. Der Schneidzahn 7 kann demnach noch weiter nachgeschärft werden, wenn sich die Schneidfläche 20 an der gedachten Verschiebung 44 befindet.

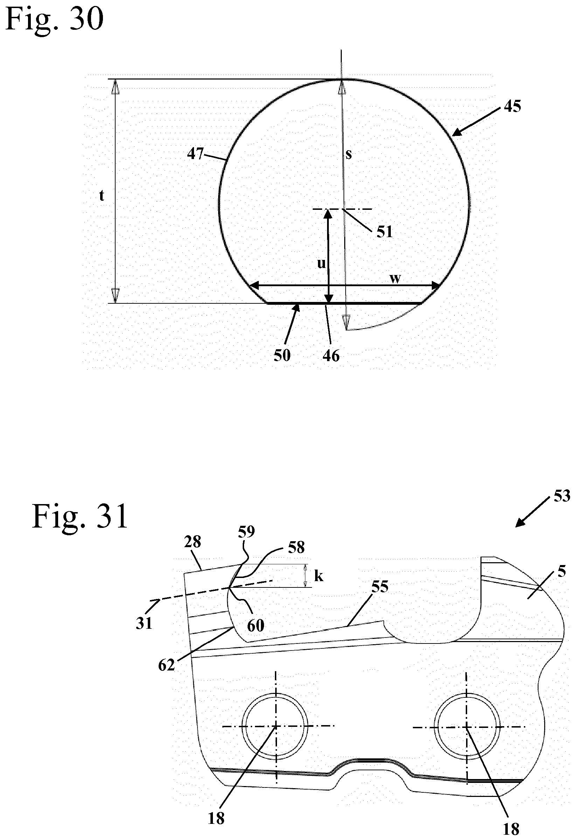

Fig. 30 zeigt eine nicht erfindungsgemäße Feile 45 in schematischem Querschnitt. Die Feile 45 besitzt an der Feilenfläche 47 einen Durchmesser s, der dem doppelten Radius r der Schneidkante 62 (Fig. 27) entspricht. Die Feile 45 besitzt eine Abflachung 50, an der die Führungsfläche 46, die nicht behauen ist, ausgebildet ist. An der Abflachung 50 besitzt die Feile 45 eine verringerte Höhe t, die kleiner als der Durchmesser s ist. Der Abstand der Längsmittelachse 51 zur Abflachung 50 entspricht dem Abstand u der Auflagefläche 55 zum Mittelpunkt M, der in Fig. 30 ebenfalls schematisch eingezeichnet ist. Der Mittelpunkt M entspricht dem Mittelpunkt des Kreises, auf dem die Feilenfläche 47 liegt. Die Führungsfläche 46 erstreckt sich vorteilhaft über mindestens ein Sechstel des Umfangs der Feile 45. Die Feile 45 besitzt eine parallel zur Führungsfläche 46 gemessene Breite w, die sich mit steigendem Abstand zur Führungsfläche 46 vergrößert. Dadurch wird ein Hinterschnitt an der Schneidfläche 20 erzeugt. Die Feilenfläche 47 erstreckt sich im Ausführungsbeispiel über einen Umfangswinkel von mehr als 270° um den Mittelpunkt M und schließt direkt an beide Längsseiten der Führungsfläche 46 an. Zweckmäßig kann eine Feile 45 auch nur durch ein Segment der in Fig. 30 dargestellten Feile 45 gebildet sein, so dass die kreisbogenförmige Feilenfläche 47 zumindest an einer Längsseite nicht direkt in die ebene Führungsfläche 46 übergeht.

Fig. 31 zeigt das Schneidglied 53 in vollständig nachgeschärftem Zustand. Auch in vollständig nachgeschärftem Zustand liegt eine in Fig. 31 schematisch eingezeichnete Verbindungslinie 58, die einen fünften Schnittpunkt 59 der Schneidkante 62 mit der Oberkante 28 des Dachabschnitts 11 mit einem sechsten Schnittpunkt der Schneidkante 62 mit der gedachten Linie 31 verbindet, parallel zu den Verbindungslinien 36 und 37 (Fig. 27). Die Verbindungslinie 58 ist dabei tatsächlich in einer Blickrichtung in Schärfrichtung 29 einzuzeichnen und in Fig. 31 nur schematisch dargestellt.

In alternativer Ausführung kann die Auflagefläche 15, 55 nur durch einen Teil des die Aussparung 9 begrenzenden Bodens gebildet sein. In weiterer alternativer Ausgestaltung kann die Auflagefläche 15 bei Blickrichtung in Laufrichtung 21 um einen Winkel η (Fig. 26) zur Lagerstellenebene 19 geneigt sein. Weitere vorteilhafte Ausführungsbeispiele ergeben sich durch beliebige Kombination einzelner Merkmale der vorstehend beschriebenen Ausführungsbeispiele.

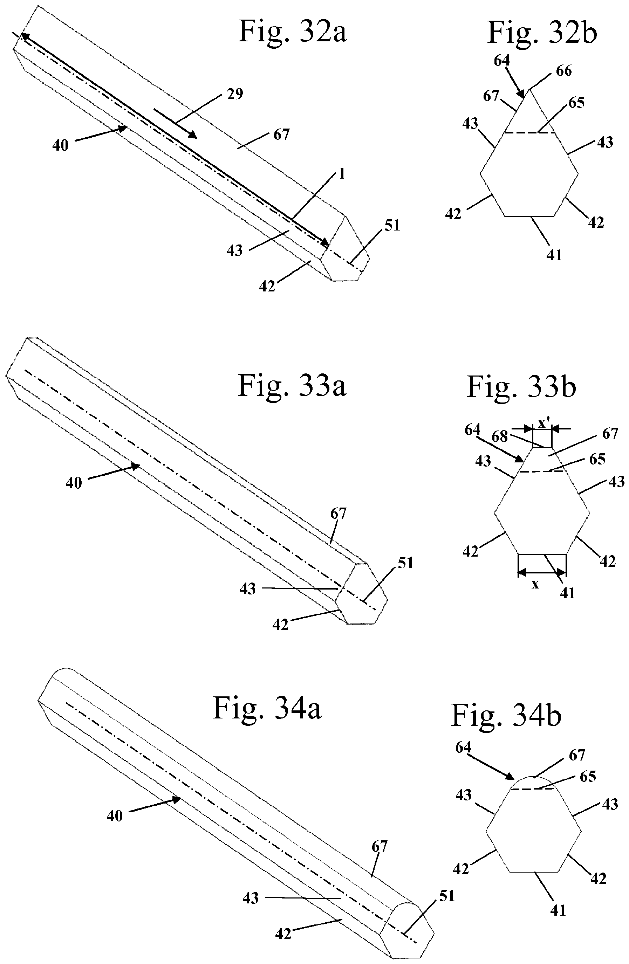

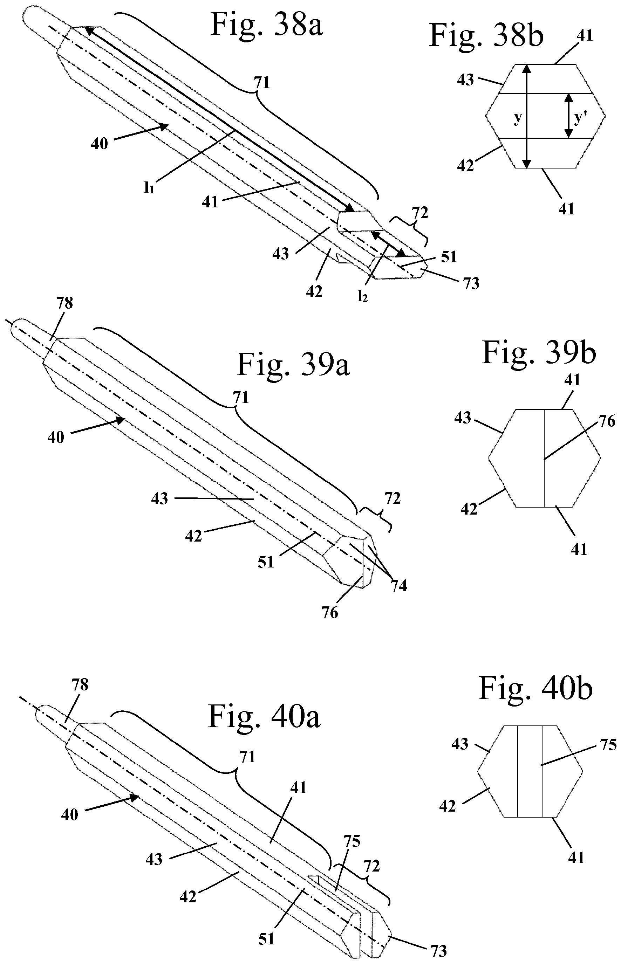

Die Figuren 32 bis 37 zeigen nicht erfindungsgemäße Ausführungsbeispiele von Feilen. Die Figuren 38-41 zeigen erfindungsgemäße Ausführungsbeispiele für Feilen zum Feilen eines Schneidzahns 7. Gleiche Bezugszeichen bezeichnen dabei die gleichen Elemente wie in den vorangegangenen Figuren.

In den Fig. 32a und 32b ist eine Feile 40 dargestellt, die eine unbehauene Führungsfläche 41, eine erste Feilenfläche 42 zum Feilen des ersten Schneidflächenabschnitts 22 sowie eine zweite Feilenfläche 43 zum Feilen des zweiten Schneidflächenabschnitts 23 aufweist. Gegenüberliegend zu den Feilenflächen 42 und 43 weist die Feile 40 weitere Feilenflächen 42 und 43 auf. Die ersten Feilenflächen 42 sind dabei beidseitig der Führungsfläche 41 angeordnet und grenzen an diese an. Die zweiten Feilenflächen 43 sind an der der Führungsfläche 41 entfernt liegenden Seite verlängert und stoßen an einer Längskante 66 aneinander an. Gegenüber einer symmetrischen, sechseckigen Gestaltung des Querschnitts der Feile 40, der in Figur 32b mit gestrichelter Linie 65 angedeutet ist, weist die Feile 40 an der der Führungsfläche 41 gegenüberliegenden Seite 64 eine ergänzende durchgehende Erhöhung 67 auf, die einen dreieckigen Querschnitt besitzt. Dadurch ergibt sich ein unregelmäßiger fünfeckiger Querschnitt der Feile 40. Im Ausführungsbeispiel erstreckt sich die Erhöhung 67 über die gesamte Länge l der ersten Feilenfläche 42. Die Länge l der ersten Feilenfläche 42 entspricht dabei der Länge des Längsabschnitts, der beim Feilen zum Kontakt mit dem ersten Schneidflächenabschnitt 22 (Fig. 2) vorgesehen ist.

Die Erhöhung 67 bildet eine optische und haptische Kennzeichnung, die dem Benutzer die Drehlage der Feile 40 um ihre Längsmittelachse 51 anzeigt. Die Erhöhung 67 bewirkt gleichzeitig, dass die Feile 40 ausschließlich mit der Führungsfläche 41 auf eine Auflagefläche 15 aufgesetzt werden kann. Ein stabiles Aufsetzen mit der Erhöhung 67 auf die Auflagefläche 15 ist geometrisch nicht möglich. Dadurch wird durch den Querschnitt der Feile 40 eindeutig eine Orientierung der Feile 40 beim Feilen vorgegeben. Dadurch, dass jeweils zwei erste Feilenflächen 42 und zwei zweite Feilenflächen 43 vorgesehen sind, kann die Feile 40 zum Feilen von rechten Schneidzähnen 7 und linken Schneidzähnen 7 in der gleichen Schärfrichtung 29 bewegt werden. Hierfür kann vorgesehen sein, dass die beiden ersten Feilenflächen 42 und die beiden zweiten Feilenflächen 43 in unterschiedlicher Weise, insbesondere mit unterschiedlichem Winkel, behauen sind.

Beim Ausführungsbeispiel nach Fig. 33a und 33b ist ebenfalls eine Erhöhung 67 vorgesehen. Die Seitenwände der Erhöhung 67, die in Verlängerung der zweiten Feilenflächen 43 verlaufen, laufen jedoch nicht wie beim Ausführungsbeispiel nach Fig. 32a und 32b in einer Längskante zusammen, sondern sind über eine Verbindungsfläche 68 miteinander verbunden. Die Verbindungsfläche 68 verläuft parallel zur Führungsfläche 41. Das Kantenmaß x' der Verbindungsfläche 68 ist, wie Fig. 33b zeigt, deutlich kleiner als das Kantenmaß x der Führungsfläche 41. Das Kantenmaß x' der Verbindungsfläche 68 ist vorzugsweise so klein gewählt, dass ein stabiles Aufsetzen der Feile 40 auf der Verbindungsfläche 68 nicht möglich ist. Bevorzugt beträgt das Kantenmaß x' weniger als 3 mm. Dadurch ist für den Bediener sowohl optisch erkennbar als auch spürbar, wenn die Feile 40 fälschlich auf der Verbindungsfläche 68 statt auf der Führungsfläche 41 aufgesetzt wird.

Fig. 34a und 34b zeigen eine Feile 40, bei der die Erhöhung 67 gebogen verläuft. Dadurch ist ein stabiles Aufsetzen und Führen der Feile 40 auf der Seite 64, die der Führungsfläche 41 gegenüberliegt, nicht möglich. Bei Aufsetzen auf die Seite 64 kippt die Feile 40 seitlich. Im Ausführungsbeispiel ist die Erhöhung als durchgehender Radius ausgebildet, der sich von der einen zur gegenüberliegenden zweiten Feilenfläche 43 erstreckt. Die Erhöhung 67 ist so groß ausgebildet, dass ein Aufsetzen der Feile 40 mit der Seite 64 auf die Auflagefläche 15 nicht möglich ist. Die Erhöhung 67 ist für den Bediener optisch und haptisch erkennbar und bildet dadurch eine Kennzeichnung, mit der die Drehlage der Feile 40 um ihre Längsmittelachse 51 erkennbar ist.

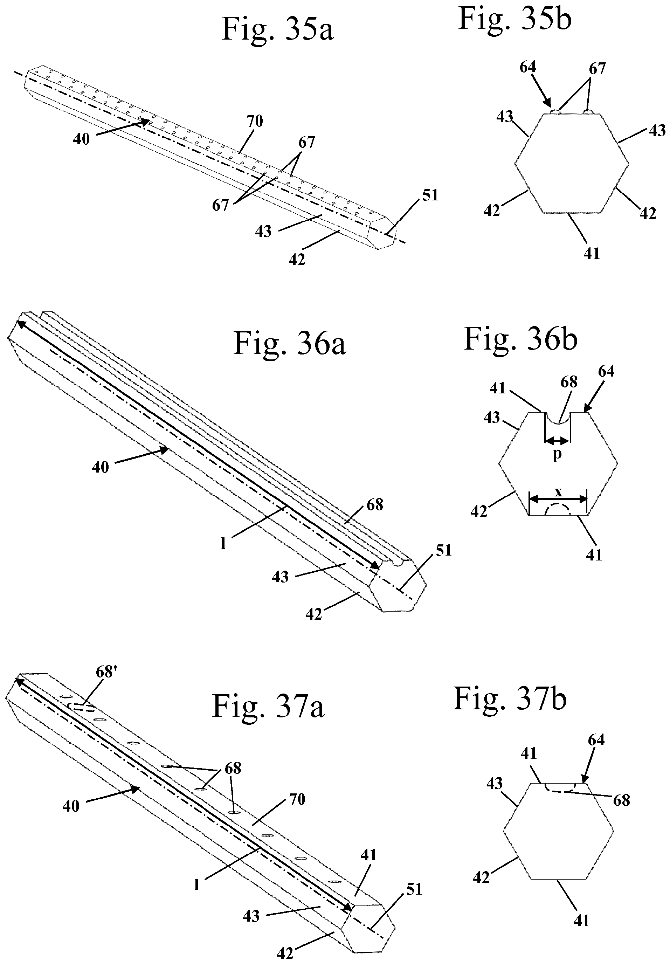

Beim Ausführungsbeispiel nach Fig. 35a und 35b ist eine Feile 40 vorgesehen, die an der der Führungsfläche 41 gegenüberliegenden Seite 64 eine Vielzahl von Erhöhungen 67 aufweist. Zwischen den Erhöhungen 67 sind, wie Figur 34a zeigt, Unterbrechungen 70 angeordnet. Die Erhöhungen 67sind im Ausführungsbeispiel in zwei Reihen angeordnet, wobei die Erhöhungen 67 der beiden Reihen vorteilhaft mit Versatz in Richtung der Längsmittelachse 51 zueinander angeordnet sind. Die Erhöhungen 67 erstrecken sich demnach in Längsrichtung 51 der Feile 40 nicht durchgehend. Bis auf die Erhöhungen 67 weist die Feile 40, wie Fig. 35b zeigt, den Querschnitt eines regelmäßigen Sechsecks auf. In Querschnitten, in denen Unterbrechungen 70 angeordnet sind, weist die Feile 40 den Querschnitt eines regelmäßigen Sechsecks auf. Beim Aufsetzen auf die Seite 64 erzeugen die Erhöhungen 67 ein ratterndes Geräusch und bilden dadurch eine akustische Kennzeichnung der Drehlage der Feile 40. Die Erhöhungen 67 bilden auch eine optische und haptische Kennzeichnung. Die Erhöhungen 67 verhindern konstruktiv, dass die Feile 40 auf der Seite 64 stabil geführt werden kann.

Beim Ausführungsbeispiel nach Fig. 36a und 36b ist eine Feile 40 dargestellt, die an der einer der Führungsflächen 41 gegenüberliegenden Seite 64 gegenüber einem Sechseckquerschnitt eine Vertiefung 68 aufweist. Auch die Vertiefung 68 bildet eine Kennzeichnung, die dem Benutzer die Drehlager der Feile 40 um ihre Längsmittelachse 51 anzeigt. Auch an der Seite 64 ist dabei eine Führungsfläche 41 ausgebildet. Die Feile 40 weist zwei einander gegenüberliegende Führungsflächen 41 auf, von denen eine, nämlich die in Fig. 36b oben dargestellte Führungsfläche 41, eine Vertiefung 68 aufweist. In alternativer Ausführung, die in Fig. 36b mit gestrichelter Linie dargestellt ist, weist auch die zweite, in Fig. 36b unten dargestellte Führungsfläche 41 eine Vertiefung 68 auf. Die Feile 40 ist bei dieser Ausführung vorzugsweise spiegelsymmetrisch zu einer mittig zwischen den Führungsflächen 41 und parallel zu den Führungsflächen 41 verlaufenden Ebene ausgebildet.

Die Vertiefung 68 ist als Nut ausgebildet und erstreckt sich im Ausführungsbeispiel über die gesamte Länge l der ersten Feilenfläche 42 der Feile 40. Wie Fig. 36b zeigt, weist die Vertiefung 68 eine Breite p auf, die das 0,2fache bis 0,8fache des Kantenmaßes x beträgt. Im Ausführungsbeispiel ist eine Breite p von etwa einem Drittel des Kantenmaßes x vorgesehen. Beidseitig der Vertiefung 68 weist die Seite 64 Abschnitte auf, die parallel zur Führungsfläche 41 verlaufen. Es kann auch vorgesehen sein, dass sich die Vertiefung 68 nur über einen Teil der Länge l der ersten Feilenfläche 42 der Feile 40 erstreckt oder dass mehrere Vertiefungen 68 vorgesehen sind, die über Unterbrechungen voneinander getrennt sind.

Beim Ausführungsbeispiel nach Fig. 37a und 37b sind eine Vielzahl von Vertiefungen 68 an der Seite 64 vorgesehen, die in Längsrichtung der Feile 40 von Unterbrechungen 70 unterbrochen sind. Die Vertiefungen 68 erstrecken sich dabei in Längsrichtung 51 über einen deutlich geringeren Anteil der Länge l der ersten Feilenfläche 42 der Feile 40 als die Unterbrechungen 70. Im Bereich der Unterbrechungen 70 weist die Feile 40 einen Sechseckquerschnitt auf. Die Seite 64 kann ebenfalls als Führungsfläche 41 ausgebildet sein. Es kann jedoch auch vorgesehen sein, dass die Vertiefungen 68 so gestaltet sind, dass die Feile 40 beim Aufsetzen auf die Seite 64 und beim Bewegen der Feile 40 über den Schneidzahn 7 rattert und so eine taktile Rückmeldung für den Bediener gibt, dass eine nicht hierfür vorgesehene Fläche auf den Schneidzahn 7 aufgesetzt wurde.

In alternativer Gestaltung weisen die beiden einander gegenüberliegenden Führungsflächen 41 Vertiefungen 68 auf, die bevorzugt symmetrisch zu einer zwischen den Führungsflächen 41 verlaufenden Ebene ausgebildet sind. Dadurch ist die Feile 40 in zwei um ihre Längsmittelachse 51 um 180° gedrehten Orientierungen einsetzbar, also wendbar. Die Vertiefungen 68 ermöglichen eine gute optische Unterscheidbarkeit der Führungsflächen 41 von den Feilenflächen 42 und 43. Je nach Gestaltung der Vertiefungen 68 können die Führungsflächen 41 von den Feilenflächen 42 und 43 auch haptisch unterscheidbar sein. Es kann vorgesehen sein, dass die Führungsflächen 41 unterschiedlichen Kennzeichnungen, beispielsweise unterschiedlich angeordnete und/ oder ausgebildete Vertiefungen 68 aufweisen, so dass die beiden Führungsflächen 41 auch voneinander optisch und/oder haptisch unterscheidbar sind.

In weiterer alternativer Gestaltung können Vertiefungen 68' vorgesehen sein, die sich über die gesamte Breite der Führungsfläche 41 erstrecken, deren Breite p also dem Kantenmaß x entspricht (Fig. 36b). In Fig. 37a ist schematisch eine solche Vertiefung 68' eingezeichnet. Vorzugsweise sind mehrere Vertiefungen 68' so angeordnet, dass sich die Vertiefungen 68' in Richtung der Längsmittelachse 51 überlappen. Die Vertiefungen 68' können dabei vorzugsweise länglich ausgebildet sein, wobei die Ausrichtung der Längsrichtung der Vertiefungen 68' zur Längsmittelachse 51 geeignet gewählt werden kann.

In weiterer alternativer Gestaltung können anstatt der Vertiefungen 68 oder 68' Erhöhungen in entsprechender Weise auf der der Führungsfläche 41 gegenüberliegenden Seite 64 angeordnet sein. Bei Erhöhungen, die sich über die gesamte Breite der der Führungsfläche 41 gegenüberliegenden Seite 64 erstrecken, ist vorteilhaft vorgesehen, dass die Erhöhungen zur Längsrichtung 51 geneigt ausgerichtet sind. Der Neigungswinkel der Erhöhungen zur Längsrichtung 51 entspricht vorzugsweise dem Winkel δ (Fig. 7). Insbesondere ist ein Neigungswinkel von 20° bis 70° zwischen der Längsrichtung der Erhebung und der Längsmittelachse 51 der Feile 40 gebildet. Wird die Feile 40 fälschlicherweise mit der Seite 64 auf die Auflagefläche 15 aufgelegt und die Feile 40 in Schärfrichtung 29 zum Schneidzahn 7 geführt, so schlägt die Erhebung auf diese Weise mit ihrer Längsseite an dem Grundkörper des Schneidzahns 7 an, was der Nutzer als deutlichen Widerstand spürt Dadurch ist für den Bediener spürbar, wenn die die Erhöhungen aufweisende Seite 64 fälschlich auf die Auflagefläche 15 aufgesetzt wird.

In besonders bevorzugter Gestaltung sind die Erhöhungen oder Vertiefungen 68' mit ihrer Längsrichtung parallel zur Längsrichtung, also zur Laufrichtung 21 der zu feilenden Sägekette 1 (Fig. 1) ausgerichtet. Dadurch erhält der Bediener über die Erhöhungen oder Vertiefungen 68' nicht nur eine Information über die Drehlage der Feile 40, sondern auch über die vorgesehene Ausrichtung der Feile 40 gegenüber der zu feilenden Sägekette 1.

Beim Ausführungsbeispiel nach Fig. 38a und 38b ist die Feile 40 in zwei Längsabschnitte 71 und 72 mit unterschiedlicher Querschnittsform unterteilt. Im ersten Längsabschnitt 71 erstrecken sich zwei einander gegenüberliegend angeordnete Führungsflächen 41, zwei erste Feilenflächen 42 sowie zwei zweite Feilenflächen 43. Im Ausführungsbeispiel weist die Feile 40 im ersten Längsabschnitt 71 einen regelmäßigen Sechseckquerschnitt auf. Der erste Längsabschnitt 71 weist eine in Richtung der Längsmittelachse 51 gemessene Länge l₁ auf. Der zweite Längsabschnitt 72 weist eine in Richtung der Längsmittelachse 51 gemessene Länge l₂ auf. Die Länge l₁ ist deutlich größer als die Länge l₂. Im zweiten Längsabschnitt 72 ist die Feile 40 an den einander gegenüberliegenden Führungsflächen 41 abgeflacht. Die Führungsflächen 41 besitzen im zweiten Längsabschnitt 72 einen Abstand y' zueinander, der deutlich kleiner als der Abstand y der Führungsflächen 41 im ersten Längsabschnitt 71 ist. Durch die Lage der abgeflachten Führungsflächen 41 im zweiten Längsabschnitt 72 ist für den Bediener die Lage der Führungsflächen 41 optisch erkennbar. Die abgeflachten Führungsflächen 41 können gleichzeitig als Auflage für die Hand, insbesondere für einen Daumen des Bedieners dienen, so dass sich eine ergonomische Bedienung ergibt. Im Ausführungsbeispiel ist der zweite Längsabschnitt 72 zwischen dem ersten Längsabschnitt 71 und einem freien Ende 73 der Feile 40 angeordnet. Im Ausführungsbeispiel grenzt der zweite Längsabschnitt 72 an das freie Ende 73 der Feile 40 an. In alternativer Ausführung kann jedoch auch vorgesehen sein, dass der zweite Längsabschnitt 72 zum freien Ende 73 einen Abstand aufweist.

Die Fig. 39a und 39b zeigen ein weiteres Ausführungsbeispiel einer Feile 40, die einen ersten Längsabschnitt 71 und einen zweiten Längsabschnitt 72 aufweist. Der zweite Längsabschnitt 72 ist zwischen dem ersten Längsabschnitt 71 und dem freien Ende 73 der Feile 40 angeordnet. Im zweiten Längsabschnitt 72 weist die Feile 40 zwei zur Längsrichtung 51 geneigte Flächen 74 auf. Die Neigung der Flächen 74 zur Längsmittelachse 51 der Feile 40 entspricht vorzugsweise dem Winkel δ (Fig. 7), unter dem die Längsmittelachse 51 der Feile 40 beim Feilen zur Laufrichtung 21 der Sägekette 1 zu führen ist. Die Flächen 74 sind im Ausführungsbeispiel eben ausgebildet. Die Flächen 74 laufen im Ausführungsbeispiel an einer Kante 76 zusammen. Die Kante 76 erstreckt sich von einer Führungsfläche 41 zur gegenüberliegenden Führungsfläche 41 und verläuft im Ausführungsbeispiel senkrecht zu den Führungsflächen 41. Die Kante 76 bildet das freie Ende 73 der Feile 40. Die Kante 76 gibt dem Bediener eine optische Rückmeldung, wo die Führungsflächen 41 angeordnet sind. Gleichzeitig kann die Kante 76 als Ersatz für einen Schraubendreher zum Lösen und Fixieren eines Kettenraddeckels einer Motorsäge eingesetzt werden.

Beim Ausführungsbeispiel nach Fig. 40a und 40b ist im zweiten Längsabschnitt 72 ein Längsschlitz 75 vorgesehen. Im Ausführungsbeispiel erstreckt sich der Schlitz 75 in Längsrichtung 51 und schneidet die Führungsflächen 41 mittig. Der Schlitz 75 gibt eine optische Rückmeldung für den Bediener, wo sich die Führungsflächen 41 befinden. Der Schlitz 75 erstreckt sich im Ausführungsbeispiel bis an das freie Ende 73 der Feile 40. Wie die Figuren zeigen, weist die Feile 40 an dem dem freien Ende 73 gegenüberliegenden Ende einen Stutzen 78 auf, der zur Montage in einem Heft, also einem Handgriff der Feile 40 vorgesehen ist.

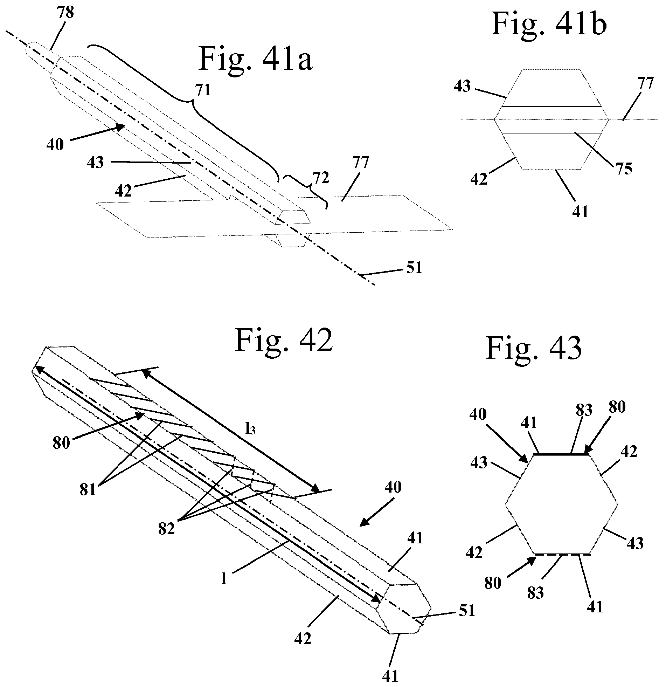

In den Fig. 41a und 41b ist ein weiteres Ausführungsbeispiel einer Feile 40 gezeigt, die zwei Längsabschnitte 71 und 72 aufweist. Im zweiten Längsabschnitt 72 weist die Feile 40 einen Längsschlitz 75 auf, der sich zwischen den Führungsflächen 41 erstreckt. Der Längsschlitz 75 verläuft im Ausführungsbeispiel parallel zu den Führungsflächen 41 und mittig zwischen den Führungsflächen 41. Der Längsschlitz 75 zeigt optisch die Lage der Führungsflächen 41 an. Gleichzeitig kann der Längsschlitz 75 zur Aufnahme einer in den Figuren 40a und 40b schematisch dargestellten Abstützung 77 für den Daumen eines Bedieners dienen.

Die in den Figuren 32 bis 41 dargestellten Ausführungen mit vom regelmäßigen Sechseckquerschnitt abweichendem Querschnitt ermöglichen es einem Bediener, die Lage der Führungsflächen 41 optisch oder haptisch besser zu erkennen. Alternativ oder zusätzlich kann eine optische Kennzeichnung einer Führungsfläche 41 und/ oder der einer Führungsfläche 41 gegenüberliegenden Seite 64 vorgesehen sein. Eine solche optische Kennzeichnung kann beispielsweise eine Lasermarkierung, eine Prägung oder ein Aufdruck sein. Vorzugsweise gibt die Markierung auch Aufschluss über die korrekte Lage der Feile 40 gegenüber der Sägekette 1. Beispielsweise kann die Kennzeichnung in Längsrichtung einer zu feilenden Sägekette 1, also in vorgegebenem Winkel zur Längsrichtung 51 der Feile 40 ausgerichtet sein.

Eine solche Kennzeichnung 80 ist schematisch in Fig. 42 dargestellt. Die Kennzeichnung 80 erstreckt sich über eine Länge l₃ der Feile 40, die mindestens 30%, insbesondere mindestens 50%, bevorzugt mindestens 80% der Länge l der ersten Feilenfläche 42 entspricht. Besonders bevorzugt erstreckt sich die Kennzeichnung 80 über eine Länge l₃, die der gesamten Länge l der ersten Feilenfläche 42 entspricht. Im Ausführungsbeispiel ist die Kennzeichnung 80 durch eine Vielzahl von Linien 81 gebildet. Die Linien 81 verlaufen im Ausführungsbeispiel zur Längsmittelachse 51 geneigt. Bevorzugt entspricht der Winkel zwischen den Linien 81 und der Längsmittelachse 51 dem Winkel δ (Fig. 7), unter dem die Längsmittelachse 51 beim Feilvorgang zur Laufrichtung 21 der Sägekette 1 zu führen ist.

In alternativer Gestaltung kann die Kennzeichnung 80 durch Linien 81 und Linien 82 gebildet sein. Die Linien 82 sind in Fig. 42 schematisch mit gestrichelter Linie dargestellt. Die Linien 81 und Linien 82 sind zur Längsmittelachse 51 gegensinnig geneigt. Bevorzugt kreuzen sich die Linien 81 und 82, so dass ein Rautenmuster entsteht. Der Abstand zwischen benachbarten Linien 81 bzw. zwischen benachbarten Linien 82 ist vorzugsweise deutlich größer als der Abstand zwischen benachbarten Hüben der Feilenflächen 42 oder 43, so dass die Führungsflächen 41 optisch gut von den Feilenflächen 42 und 43 zu unterscheiden sind.

Die Linien 81 und 82 können als Markierung auf die Feile 40 aufgebracht sein. In bevorzugter Gestaltung sind die Linien 81 und 82 jedoch als Rillen oder als Erhöhungen ausgebildet. Die Linien 81 und 82 können beispielsweise mittels Laser eingeschnitten sein.

Eine optische Kennzeichnung kann auch eine farbliche Beschichtung, eine polierte Fläche, eine verchromte Fläche oder dgl. sein. Durch eine farbliche Beschichtung mit einem den Reibwert verringernden Lack, das Polieren oder Verchromen wird gleichzeitig eine Verringerung der Reibung erreicht. Eine solche Kennzeichnung wird bevorzugt an der Führungsfläche 41 aufgebracht, so dass die Reibung beim Feilen verringert ist. Auch eine Anordnung einer solchen Markierung an der der Führungsfläche 41 gegenüberliegenden Seite 64 kann jedoch vorteilhaft sein. Dies ist schematisch in Fig. 43 dargestellt. Die in Fig. 43 im Querschnitt dargestellte Feile 40 weist zwei einander gegenüberliegende Führungsflächen 41 auf. An einer Führungsfläche 41 ist eine Kennzeichnung 80 in Form einer Beschichtung 83 aufgebracht. Optional kann auch an der gegenüberliegenden Führungsfläche 41 eine Kennzeichnung 80 in Form einer Beschichtung 83 aufgebracht sein. Dies ist in Fig. 43 durch eine gestrichelte Linie verdeutlicht. Die Kennzeichnung 80 erstreckt sich vorzugsweise über mindestens 30%, insbesondere über mindestens 50%, besonders bevorzugt über mindestens 80% der Länge l der ersten Feilenfläche 42. In besonders bevorzugter Gestaltung erstreckt sich die Kennzeichnung 80 über eine Länge, die der Länge l der ersten Feilenfläche 42 entspricht. Die Länge der Kennzeichnung 80 ist so gewählt, dass die Kennzeichnung 80 auch bei ungünstigen Lichtverhältnissen vom Bediener gut optisch wahrgenommen werden kann.

In alternativer Gestaltung ist vorgesehen, dass die Führungsfläche 41 in einem induktiven Härteverfahren angelassen wird, wodurch sich eine blaue Färbung der Führungsfläche 41 ergibt. Gleichzeitig wird der Verschleiß der Führungsfläche 41 aufgrund der vergrößerten Härte verringert.

Vorteilhaft ist die Kennzeichnung so ausgebildet, dass sie sowohl eine optisch gut erkennbare Anzeige der Drehlage für den Bediener bildet als auch eine technische Wirkung aufweist. Die technische Wirkung ist im Falle einer als Beschichtung ausgebildeten Kennzeichnung vorteilhaft eine Verringerung der Reibung zwischen Feile 40 und Schneidzahn 7. Im Falle einer als Erhöhung ausgebildeten Kennzeichnung ist die Erhöhung vorteilhaft so geformt, dass ein Aufsetzen der Feile 40 auf die mit der mindestens einen Erhöhung versehene Seite auf die Auflagefläche 15 eines Schneidzahns 7 vom Bediener spürbar ist. Dies kann beispielsweise eine instabile Auflage oder das Erzeugen von Rattern beim Feilvorgang sein. Erhöhungen oder Vertiefungen verringern gleichzeitig die Verschmutzungsneigung der Führungsfläche 41, da Verschmutzungen beim Feilen in die Vertiefungen bzw. zwischen die Erhöhungen gefördert werden.

## Patentansprüche

1. Feile zum Feilen eines Schneidzahns einer Sägekette, wobei die Feile (40, 45) in einem Querschnitt eine unbehauene Führungsfläche (41, 41', 41", 46) und mindestens eine in Umfangsrichtung an die Führungsfläche (41, 41', 41", 46) angrenzende erste Feilenfläche (42, 47) besitzt, wobei die Feile (40) eine in Umfangsrichtung an die erste Feilenfläche (42) angrenzende zweite Feilenfläche (43) besitzt, wobei die Führungsfläche (41, 41', 41") mit der ersten Feilenfläche (42) einen ersten Winkel (α') einschließt, der mehr als 90° beträgt, und wobei die Führungsfläche (41, 41', 41") mit der zweiten Feilenfläche (43) einen zweiten Winkel (β') einschließt, der weniger als 90° beträgt, wobei die erste Feilenfläche (42), die zweite Feilenfläche (43) und die Führungsfläche (41, 41', 41", 46) im Querschnitt gerade ausgebildet sind, wobei die Feile (40) einen ersten Längsabschnitt (71) aufweist, der die erste Feilenfläche (42), die zweite Feilenfläche (43) und die Führungsfläche (41) aufweist,
**dadurch gekennzeichnet, dass** die Feile (40) einen zweiten Längsabschnitt (72) aufweist, dessen Querschnitt von dem Querschnitt in dem ersten Längsabschnitt (71) abweicht, wobei der zweite Längsabschnitt (72) zwischen dem ersten Längsabschnitt (71) und einem freien Ende (73) der Feile (40) angeordnet ist, wobei die Feile (40) an dem dem freien Ende (73) gegenüberliegenden Ende einen Stutzen (78) aufweist, der zur Montage in einem Heft vorgesehen ist, wobei die Feile (40) im zweiten Längsabschnitt (72) einen gegenüber dem Querschnitt im ersten Längsabschnitt (71) an mindestens einer Seite abgeflachten Querschnitt aufweist und/oder wobei die Feile (40) in dem zweiten Längsabschnitt (72) mindestens eine zur Längsrichtung (51) geneigte Fläche (74) aufweist und/oder wobei die Feile (40) im zweiten Längsabschnitt (72) einen Längsschlitz (75) aufweist.

2. Feile nach Anspruch 1,
**dadurch gekennzeichnet, dass** die Feile (40) in dem zweiten Längsabschnitt (72) an mindestens einer Führungsfläche (41) abgeflacht ausgebildet ist.

3. Feile nach Anspruch 1 oder 2,
**dadurch gekennzeichnet, dass** das Kantenmaß (x') der der Führungsfläche (41) gegenüberliegenden Seite (64) der Feile (40) vom Kantenmaß (x) der Führungsfläche (41) abweicht.

4. Feile nach Anspruch 3,
**dadurch gekennzeichnet, dass** das Kantenmaß (x') der der Führungsfläche (41) gegenüberliegenden Seite (64) der Feile (40) kleiner als das Kantenmaß (x) der Führungsfläche (41) ist.

5. Feile nach Anspruch 3 oder 4,
**dadurch gekennzeichnet, dass** die Form der der Führungsfläche (41, 46) gegenüberliegenden Seite (64) der Feile (40) in mindestens einem Querschnitt von einem Verlauf parallel zur Führungsfläche (41, 46) abweicht.

6. Feile nach Anspruch 5,
**dadurch gekennzeichnet, dass** die der Führungsfläche (41, 46) gegenüberliegende Seite (64) der Feile (40) mindestens eine Erhöhung (67) aufweist.

7. Feile nach Anspruch 5 oder 6,
**dadurch gekennzeichnet, dass** die der Führungsfläche (41) gegenüberliegende Seite (64) der Feile (40) mindestens eine Vertiefung (69) aufweist.

8. Feile nach einem der Ansprüche 1 bis 7,
**dadurch gekennzeichnet, dass** die unbehauene Führungsfläche (41, 41', 41", 46) sich über mindestens 1/6 des Umfangs der Feile (40, 45) in diesem Querschnitt erstreckt.

9. Feile nach einem der Ansprüche 1 bis 8,
**dadurch gekennzeichnet, dass** die parallel zur Führungsfläche (41, 41', 41", 46) gemessene Breite (w) der Feile (40, 45) sich in mindestens einem Bereich des Querschnitts der Feile (40, 45) mit steigendem Abstand von der Führungsfläche (41, 41', 41", 46) vergrößert.

10. Feile nach einem der Ansprüche 1 bis 9,
**dadurch gekennzeichnet, dass** die Führungsfläche (41) durch mindestens eine Vertiefung (69) unterbrochen ist.

11. Feile nach einem der Ansprüche 1 bis 10,
**dadurch gekennzeichnet, dass** die Feile (40) über mindestens 30% der Länge (l) der ersten Feilenfläche (42) eine Kennzeichnung (80) trägt, die die Drehlage der Feile (40) um ihre Längsmittelachse (51) angibt.

12. Feile nach Anspruch 11,
**dadurch gekennzeichnet, dass** die Kennzeichnung (80) sich an der Führungsfläche (41) und/oder an der der Führungsfläche (41) gegenüberliegenden Seite (64) der Feile (40) vollflächig über mindestens 30% der Länge (l) der ersten Feilenfläche (42) erstreckt.

## Claims

1. File for filing a cutting tooth of a saw chain, wherein, in a cross section, the file (40, 45) has a rough guide surface (41, 41', 41", 46) and at least one first file surface (42, 47) circumferentially adjoining the guide surface (41, 41', 41", 46), wherein the file (40) has a second file surface (43) circumferentially adjoining the first file surface (42), wherein the guide surface (41, 41', 41") includes a first angle (α') of greater than 90° with the first file surface (42), and wherein the guide surface (41, 41', 41") includes a second angle (β') of less than 90° with the second file surface (43), wherein, in the cross section, the first file surface (42), the second file surface (43) and the guide surface (41, 41', 41", 46) are of straight form, wherein the file (40) has a first longitudinal portion (71), which has the first file surface (42), the second file surface (43) and the guide surface (41),
**characterized in that** the file (40) has a second longitudinal portion (72), whose cross section differs from the cross section in the first longitudinal portion (71), wherein the second longitudinal portion (72) is arranged between the first longitudinal portion (71) and a free end (73) of the file (40), wherein, at the end situated opposite the free end (73), the file (40) has a connecting piece (78) which is intended for being fitted in a handle, wherein, in the second longitudinal portion (72), the file (40) has a cross section which, in comparison with the cross section in the first longitudinal portion (71), is flattened at at least one side, and/or wherein, in the second longitudinal portion (72), the file (40) has at least one surface (74) which is inclined in relation to the longitudinal direction (51), and/or wherein, in the second longitudinal portion (72), the file (40) has a longitudinal slot (75).

2. File according to Claim 1,
**characterized in that**, in the second longitudinal portion (72), the file (40) is of flattened form at at least one guide surface (41).

3. File according to Claim 1 or 2,
**characterized in that** the edge dimension (x') of that side (64) of the file (40) which is situated opposite the guide surface (41) differs from the edge dimension (x) of the guide surface (41).

4. File according to Claim 3,
**characterized in that** the edge dimension (x') of that side (64) of the file (40) which is situated opposite the guide surface (41) is smaller than the edge dimension (x) of the guide surface (41).

5. File according to Claim 3 or 4,
**characterized in that** the shape of that side (64) of the file (40) which is situated opposite the guide surface (41, 46) differs in at least one cross section from a profile parallel to the guide surface (41, 46).

6. File according to Claim 5,
**characterized in that** that side (64) of the file (40) which is situated opposite the guide surface (41, 46) has at least one elevation (67).

7. File according to Claim 5 or 6,
**characterized in that** that side (64) of the file (40) which is situated opposite the guide surface (41) has at least one depression (69).

8. File according to one of Claims 1 to 7,
**characterized in that** the rough guide surface (41, 41', 41", 46) extends over at least 1/6 of the periphery of the file (40, 45) in the cross section in this case.

9. File according to one of Claims 1 to 8,
**characterized in that** the width (w), measured parallel to the guide surface (41, 41', 41", 46), of the file (40, 45) increases with increasing distance from the guide surface (41, 41', 41", 46) in at least one region of the cross section of the file (40, 45).

10. File according to one of Claims 1 to 9,
**characterized in that** the guide surface (41) is interrupted by at least one depression (69).

11. File according to one of Claims 1 to 10,
**characterized in that** the file (40) bears over at least 30 % of the length (l) of the first file surface (42) an identifier (80) which indicates the rotational position of the file (40) about its longitudinal central axis (51).

12. File according to Claim 11,
**characterized in that** the identifier (80) extends in a full-area manner over at least 30 % of the length (l) of the first file surface (42) on the guide surface (41) and/or on that side (64) of the file (40) which is situated opposite the guide surface (41).

## Revendications

1. Lime pour limer une dent de coupe d'une chaîne de scie, la lime (40, 45) possédant, dans une section transversale, une surface de guidage non taillée (41, 41', 41", 46) et au moins une première surface de lime (42, 47) adjacente à la surface de guidage (41, 41', 41", 46) dans la direction circonférentielle, la lime (40) possédant une deuxième surface de lime (43) adjacente à la première surface de lime (42) dans la direction circonférentielle, la surface de guidage (41, 41', 41") formant avec la première surface de lime (42) un premier angle (α') qui est supérieur à 90°, et la surface de guidage (41, 41', 41") formant avec la deuxième surface de lime (43) un deuxième angle (β') qui est inférieur à 90°, la première surface de lime (42), la deuxième surface de lime (43) et la surface de guidage (41, 41', 41", 46) étant réalisées sous forme droite dans la section transversale, la lime (40) présentant une première section longitudinale (71) qui présente la première surface de lime (42), la deuxième surface de lime (43) et la surface de guidage (41),
**caractérisée en ce que** la lime (40) présente une deuxième section longitudinale (72) dont la section transversale diffère de la section transversale dans la première section longitudinale (71), la deuxième section longitudinale (72) étant agencée entre la première section longitudinale (71) et une extrémité libre (73) de la lime (40), la lime (40) présentant, à l'extrémité opposée à l'extrémité libre (73), une tubulure (78) qui est prévue pour le montage dans un manche, la lime (40) présentant dans la deuxième section longitudinale (72) une section transversale aplatie sur au moins un côté par rapport à la section transversale dans la première section longitudinale (71) et/ou la lime (40) présentant dans la deuxième section longitudinale (72) au moins une surface (74) inclinée par rapport à la direction longitudinale (51) et/ou la lime (40) présentant dans la deuxième section longitudinale (72) une fente longitudinale (75).

2. Lime selon la revendication 1,
**caractérisée en ce que** la lime (40) est réalisée sous forme aplatie dans la deuxième section longitudinale (72) sur au moins une surface de guidage (41).

3. Lime selon la revendication 1 ou 2,
**caractérisée en ce que** la dimension de bord (x') du côté (64) de la lime (40) opposé à la surface de guidage (41) diffère de la dimension de bord (x) de la surface de guidage (41).

4. Lime selon la revendication 3,
**caractérisée en ce que** la dimension de bord (x') du côté (64) de la lime (40) opposé à la surface de guidage (41) est inférieure à la dimension de bord (x) de la surface de guidage (41).

5. Lime selon la revendication 3 ou 4,
**caractérisée en ce que** la forme du côté (64) de la lime (40) opposé à la surface de guidage (41, 46) diffère dans au moins une section transversale d'un tracé parallèle à la surface de guidage (41, 46).

6. Lime selon la revendication 5,
**caractérisée en ce que** le côté (64) de la lime (40) opposé à la surface de guidage (41, 46) présente au moins une surélévation (67).

7. Lime selon la revendication 5 ou 6,
**caractérisée en ce que** le côté (64) de la lime (40) opposé à la surface de guidage (41) présente au moins un creux (69).

8. Lime selon l'une quelconque des revendications 1 à 7,
**caractérisée en ce que** la surface de guidage non taillée (41, 41', 41", 46) s'étend sur au moins 1/6 de la circonférence de la lime (40, 45) dans cette section transversale.

9. Lime selon l'une quelconque des revendications 1 à 8,
**caractérisée en ce que** la largeur (w) de la lime (40, 45), mesurée parallèlement à la surface de guidage (41, 41', 41", 46), s'agrandit dans au moins une zone de la section transversale de la lime (40, 45) lorsque la distance à la surface de guidage (41, 41', 41", 46) augmente.

10. Lime selon l'une quelconque des revendications 1 à 9,
**caractérisée en ce que** la surface de guidage (41) est interrompue par au moins un creux (69).

11. Lime selon l'une quelconque des revendications 1 à 10,
**caractérisée en ce que** la lime (40) porte sur au moins 30 % de la longueur (l) de la première surface de lime (42) un marquage (80) indiquant la position en rotation de la lime (40) autour de son axe longitudinal médian (51).

12. Lime selon la revendication 11,
**caractérisée en ce que** le marquage (80) s'étend sur la surface de guidage (41) et/ou sur le côté (64) de la lime (40) opposé à la surface de guidage (41), sur toute la surface, sur au moins 30 % de la longueur (l) de la première surface de lime (42).
